## Europäisches Patentamt
## European Patent Office
## Office européen des brevets

(11) Publication number: **0 048 625**
**B1**

## EUROPEAN PATENT SPECIFICATION

(45) Date of publication of patent specification: **20.02.85**

(51) Int. Cl.⁴: **H 04 N 1/41,** G 06 F 3/12

(21) Application number: **81304363.5**

(22) Date of filing: **22.09.81**

(54) **Printer interface unit with data transformation.**

(30) Priority: **22.09.80 US 189412**

(43) Date of publication of application:
**31.03.82 Bulletin 82/13**

(45) Publication of the grant of the patent:
**20.02.85 Bulletin 85/08**

(84) Designated Contracting States:
**DE FR GB**

(56) References cited:
EP-A-0 006 131
US-A-3 728 684
US-A-4 005 390
US-A-4 031 519
US-A-4 149 145

IBM TECHNICAL DISCLOSURE BULLETIN, vol.
15, no. 10, March 1973, pages 3259-3260 New
York, U.S.A. R.A. THORPE: "Triple function
box"

(73) Proprietor: **XEROX CORPORATION**
**Xerox Square - 020**
**Rochester New York 14644 (US)**

(72) Inventor: **Saran, Amitabh**
**6114 Lawrence Street**
**Cypress California (US)**
Inventor: **Dashiell, Stephen R.**
**1005 N.Hill Avenue**
**Pasadena California (US)**
Inventor: **Yew, Thomas H.C.**
**28140 Lomo Drive**
**Rancho Palos Verdes California 90247 (US)**
Inventor: **Higa, Toshio**
**6852 Langdon Avenue**
**Van Nuys California 91406 (US)**
Inventor: **Friedman, Carl**
**320 The Village**
**Redondo Beach California (US)**
Inventor: **Rider, Ronald E.**
**2906 Via Victoria**
**Palos Verdes Estates California 90274 (US)**
Inventor: **Sperber, Otto**
**6792 Canterbury Drive**
**Huntington Beach California (US)**

Courier Press, Leamington Spa, England.

(74) Representative: **Weatherald, Keith Baynes et al European Patent Attorney Rank Xerox Limited Patent Department 338 Euston Road London NW1 3BH (GB)**

# Description

This invention is a digital system for coupling data stored in a computer memory to an output printer. The stored data may be either text stored in character-coded form or imaginal data stored in compressed form. This invention will convert both types of data into bit map form suitable for serial transmission into a raster output scanner (ROS) printer.

Information to be stored or transmitted is frequently compressed to reduce memory requirements or transmission time. In order to be printed, these data must first be decompressed. Text can be converted from character codes to fonts in a font generator, and image data are typically run-length decoded.

Fonts and images are usually generated for a raster output scanner serially, one line at a time. A line of a page containing mixed text and image data can be constructed by switching from image data to font data at the appropriate places on each line. Such a system is described in US—A—4 149 145 which, in addition to the above, uses a four-line buffer, two lines for input and two for output, to speed up the delivery of serial data to the printer.

The speed of such a system for the assembling of mixed text and image data can be significantly increased by the use of bit map circuitry. Any number of images can be received, decompressed, enlarged or reduced and placed anywhere in a bit map corresponding to one page. Similarly, coded alphanumerics can be used to generate fonts of any style and pitch, and these too can be located anywhere in the bit map. Finally, the resultant composite can be printed, line by line, at high speed on a raster output scanner.

Bit map systems have several advantages. When used to drive CRT displays, once the bit map is constructed, it can be read out repeatedly, while a known system must be reconstructed each time it is read out. To update a bit map, only the parts of the display that are different must be changed. And, to display computer graphics, like a vertical line, only the affected bit positions need be accessed. For the high speed generation of complex graphics where, for instance, several images, fonts and graphics must exist on the same raster line, a bit map system is essential. The obvious disadvantage of a bit-mapped system is cost, since a large amount of hardware is required. The present specification describes a number of strategies, such as compression and band buffering which reduce the amount of hardware that is required, and which make a bit-mapped system commercially possible. Each band buffer contains 64 lines of the bit map instead of a full page.

The other difficulty is in assembling text, in the form of fonts, and images into the bit map priot to printing. This is a highly complex procedure and the system must comprise a mixture of specially designed chips and firmware to provide a cost-effective apparatus to perform this function at high speed. The various required circuits and programs are described in this specification. The result is a sytem comprising a font generator, an image data decompressor, and bit map band buffers. The combination of these three items is not mentioned in the prior art.

For text, the character coded data are converted to fonts either in the processor or computer, or in a dedicated font generator, prior to transmission to the Electronic Output Module (EOM). In the EOM they are coupled to the Band buffers for insertion into a bit map band prior to transmission to the printer.

Imaginal data, prior to transmission or storage in memory, are assumed to have been compressed through the use of a predictor and a type of run-length encoder. Also the resulting variable length words are assumed to have been packed into sixteen-bit words. Therefore, when imaginal data are received by the EOM, they are coupled to the Decompressor section where they are unpacked, decoded and depredicted prior to coupling to the Band Buffer for insertion into a bit map.

The Output Port Controller comprises buffering between the processor and the remainder of the EOM for data and the various necessary handshaking signals.

Finally, the text fonts and the reconstituted image data are combined in the Band Buffers to produce bit maps which contain images and text. The bit maps are, in fact, produced one band at a time. Two band buffers are used, one in which the current band is assembled, and one from which the previous band is output to the printer.

The Output Port Controller has two functions. The first is to buffer the flow of data between the processor and the EOM. The second is to couple control signals from the processor to the various circuits in the EOM to be controlled.

The system may be provided with a bypass for the decompressor in the event that raw image data are received from the processor for inclusion in the bit map, and may be further provided with a signal path from the band buffer output to the processor storage for storing composite image-text bands for future printing.

The resultant system is capable of reproducing high-resolution bit maps suitable for printing on a ROS at high data rates from compressed image data and character-coded text inputs.

Reference should now be made to the claims in which the present invention is set out.

The present invention will now be described by way of example with reference to the accompanying drawings, in which:

Figures 1A and 1B form a diagram of the entire system.

Figure 3 is a diagram of the Input channel Buffers.

Figures 4 through 9 are state diagrams of the Input Channel Buffers.

Figure 10 is a data flow diagram of the Input Parameter Buffer.

Figures 11, 13 and 14 are Input Parameter Buffer flow diagrams.

Figures 15, 16 and 17, are Output Channel Buffer flow diagrams.

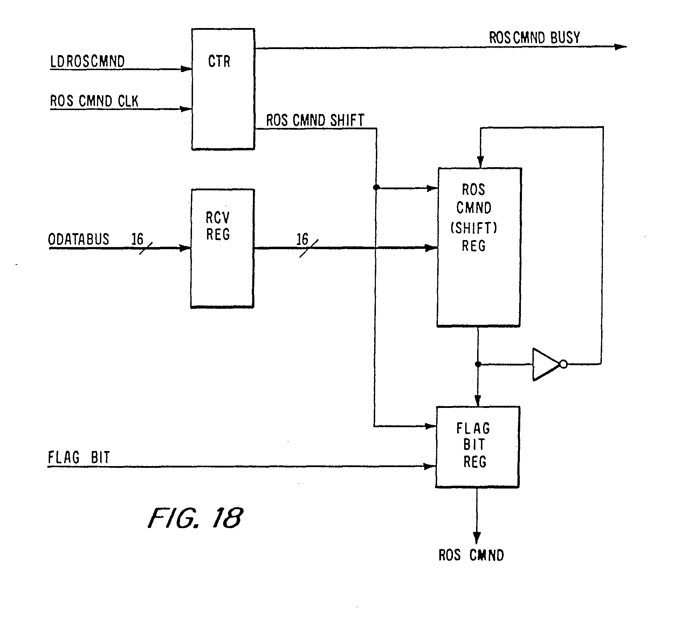

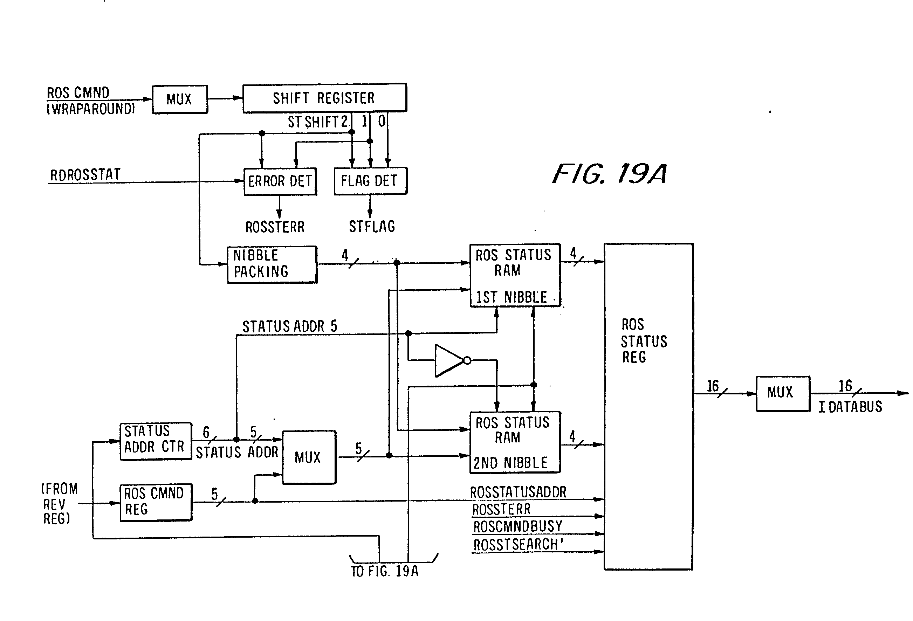

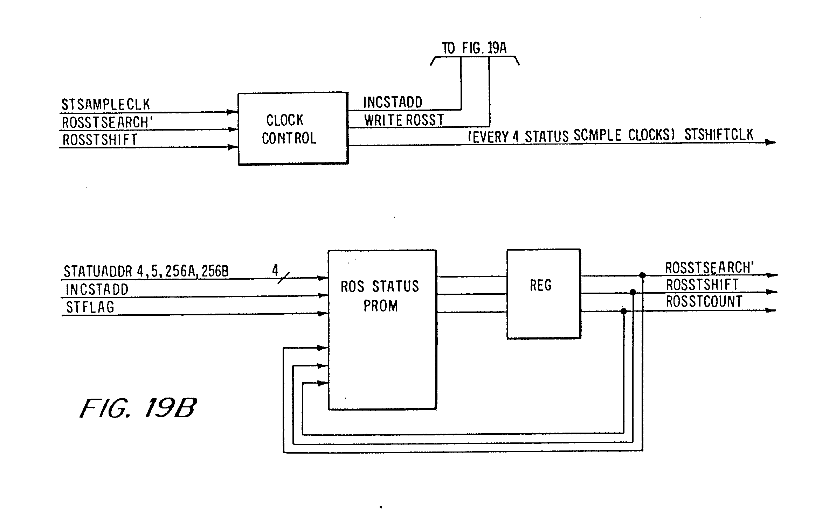

Figures 18 and 19 are diagrams of the raster output scanner control logic.

Figure 20 is a diagram of the Decompressor.

Figure 21 is a diagram of the Unpacker of the Decompressor.

Figure 22 is a diagram of the Decoder of the Decompressor.

Figure 23 is a diagram of the Depredictor of the Decompressor.

Figure 24 is the predictor bit pattern.

Figure 25 is a diagram of a portion of the Depredictor.

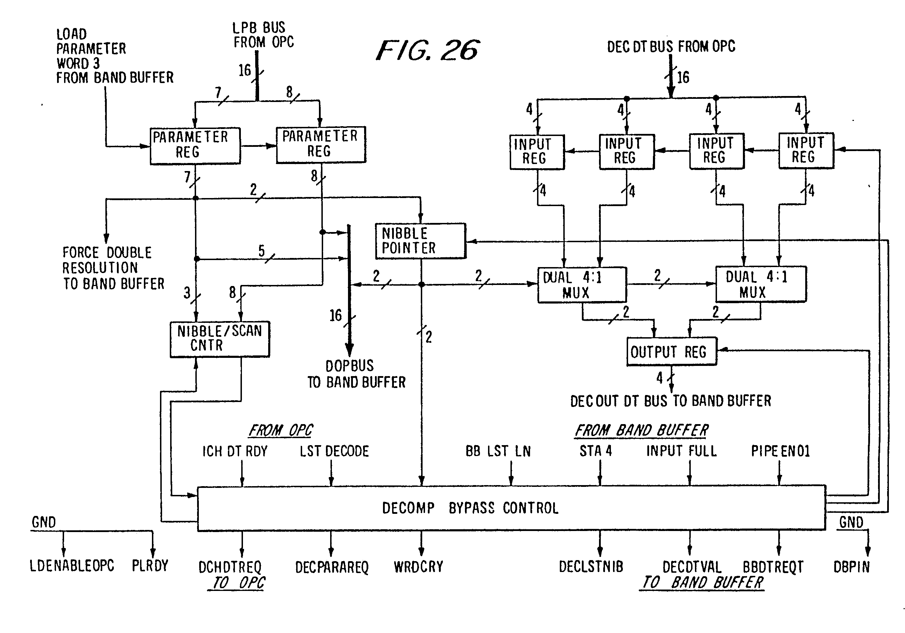

Figure 26 is a diagram of the Decompressor bypass circuit.

Figure 27 is a Band Buffer circuit diagram.

Figure 28 shows the bits as they are arranged in a parameter word.

Figure 29 is a data flow diagram of the Band Buffers.

Figure 30 is a state diagram of the data control signals to the Input Register.

Figure 31 is a state diagram of the data transfer to the Shifter Input.

Figure 32 and 33 are Band Buffer data flow diagrams.

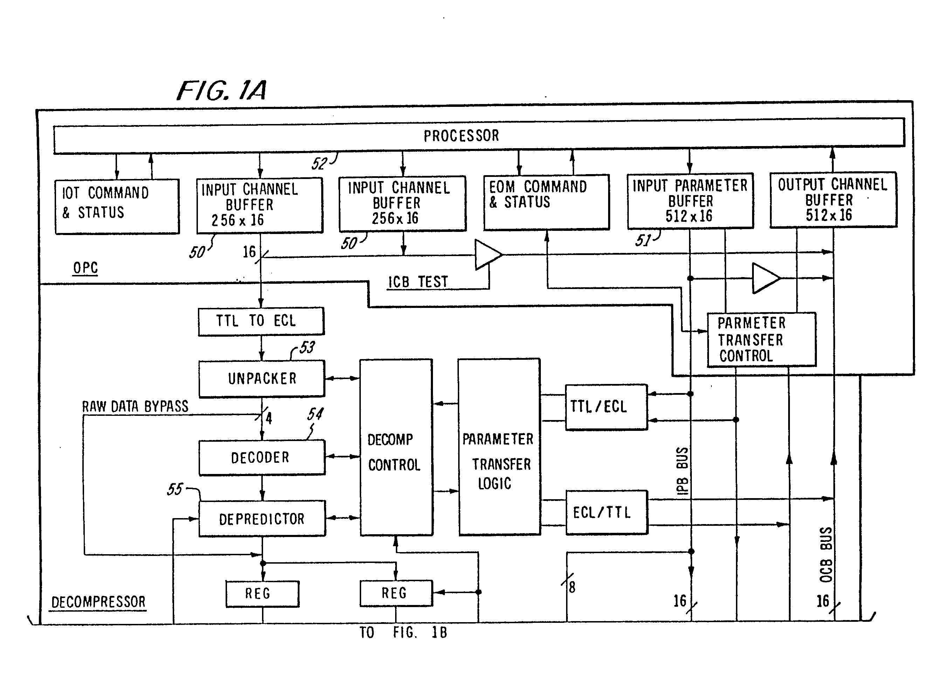

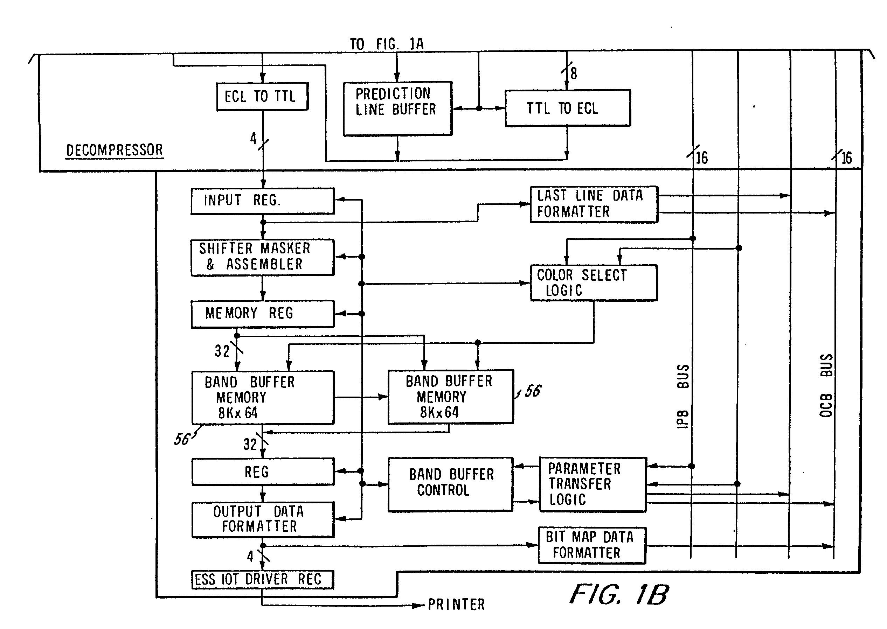

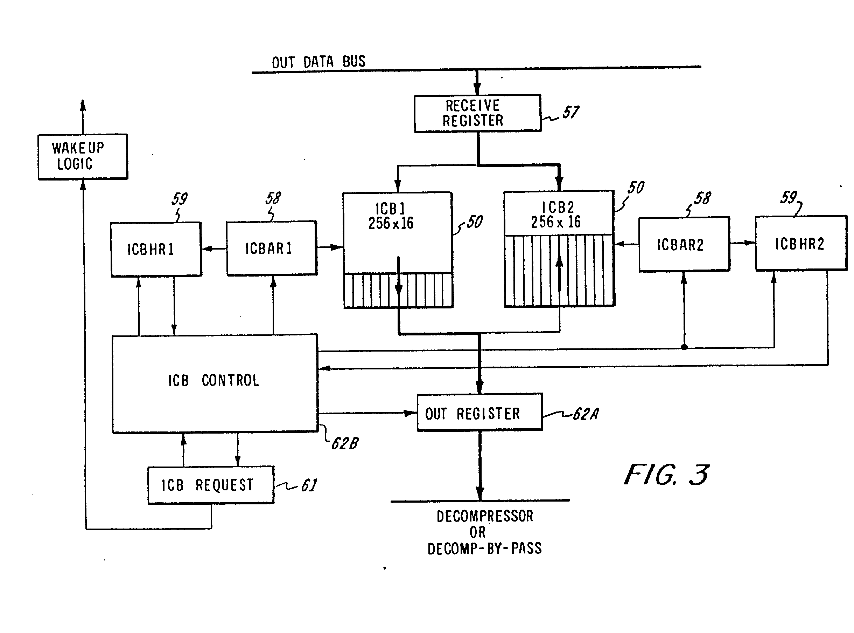

As shown in Fig. 1, the Electric Output Module (EOM) is divided into three functional subsystems, the Output Port Controller (OPC), the Decompressor, and the Band Buffer. The Output Port Controller controls data exchange between the processor and the remainder of the EOM. The Decompressor performs imaginal and font decompression using algorithms to be explained below. In the case where the majority of the material to be printed is text, the Decompressor may be by-passed, resulting in the configuration of Fig. 2. In this case all bit maps, imaginal or orthographic, must be in uncompressed (raw) form. The third functional subsystem is the Band Buffer which is used for high speed character generation and imaginal and orthographic data merge. It consists of two 8K×64 solid state ORing buffers into which character bit maps and imaginal data are overlayed for subsequent transfer to the printer. A band in this system represents a strip, approximately one fifth of an inch wide, across the width of the printed hard copy output.

Figs. 1 and 2 are block diagrams of the EOM. In Fig. 1, the EOM uses RAM Input Channel Buffers 50, 51 to receive data from the processor interface 52. The data may be compressed or raw images. If the data are compressed (in this system, data are compressed by processing them with a predictor and a type of run-length coder, and then packing the output into sixteen-bit words) they are first processed by the Unpacker 53, Decoder 54, and Depredictor 55. The resulting image bit map is then loaded into one of two 64-line ORing Band Buffers 56. The image bit map is aligned (shifted) and positioned within a scan, as specified by the parameters received from the processor 52 at the Input Parameter Buffer 51, before it is placed in the Band Buffer 56. When bit maps for all the specified characters in a band are overlayed in the Band Buffers 56, its contents are transmitted, in packets, to the printer. While one Band Buffer 56 is being emptied, the other is being loaded with data. As a Buffer is emptied, it is cleared to zero.

If a character traverses a band boundary, the information necessary to continue its decompression and positioning in the next band is transmitted back to the processor memory for storage until it is needed in the next band.

Orthographic and imaginal bit maps are not processed identically. The two-line predictor bit pattern used for imaginal data has eleven elements, while the pattern used for orthographic data has six.

The Output Port Controller (OPC) (the upper portion of Fig. 1) is the main link between the processor and the remainder of the EOM. The processor communicates with the EOM using single-word and sixteen-word block transfers. Single word transfers are used for parameter, and block transfers are used for data, transfer. RAM buffers are used for receiving the data.

The two Input Channel Buffers 50, shown in Fig. 1, comprise the main data buffer within the EOM where bit maps, either compressed or raw, are received from the processor. The compressed data to be imageflow from this buffer to the Decompressor and the raw data to the Band Buffers 56.

Each Input Channel Buffer is a 256×16 RAM buffer. Since bit maps for font characters are small, data for most characters can be accommodated within one 256×16 Buffer. Having the second Buffer gives the system the capability to load the next character to be printed in the second buffer while data in the current buffer are being processed. This mode of operation is referred to as font mode pre-loading. Any font character with bit map data exceeding 16 blocks (1 Buffer) will be treated as imaginal data.

When bit maps are large, as for images, one Input Channel Buffer is not sufficient to hold the entire bit map. In this case, the EOM uses the buffers 50 in a ping-pong mode, where one buffer 50 is being emptied while the other is filled. When one is emptied, the roles are switched. This mode of generation is referred to as the imaginal mode.

Fig. 3 is the block diagram of the Input Channel Buffers (ICB) 50. The circuit comprises a Receive Register 57, two buffers 50, two address registers 58, two holding registers 59, one Out Register 62A, ICB Request logic 61 and ICB Control logic 62B.

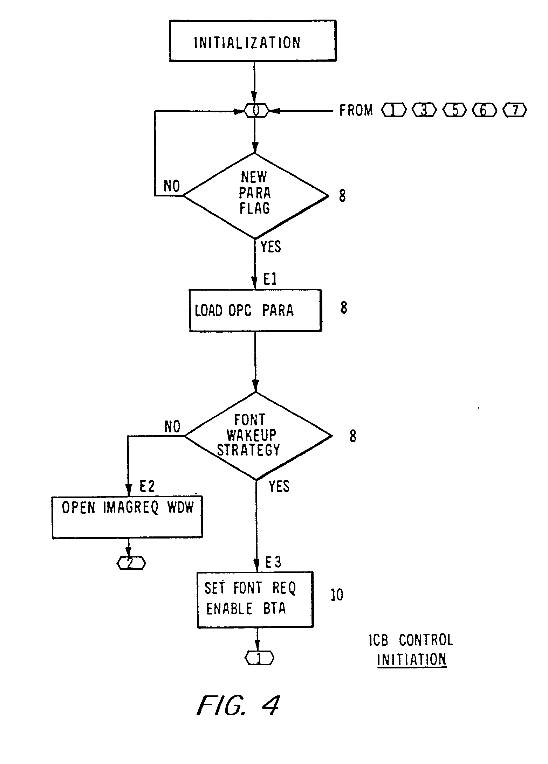

The ICB Control logic 62 comprises a state sequencer which is initialized to state 0, as shown in Fig. 4. This is the idle state in which the ICB waits for the signal NewParaFlg (New Parameter Flag) from the IP to go high, signifying that new OPC parameters are ready to be loaded from the IPB (Input Parameter Buffer). The FontWUStgy (font wakeup strategy) bit, the Rule bit, and the BTA (blocks to be accessed) count have been previously stored during the loading of IPB. The BTA count consists of the number of blocks of data to be accessed for the character in the font mode, or the "comfort level" in imaginal mode. The comfort level is the optimum level to which a buffer is loaded to maximize bandwidth.

At the time when new OPC parameters (Load OPC Parameters) are being loaded, the FontWUStgy bit is examined. If this bit is set, the implication is that the next information is a font character bit map which will fit in one buffer. A Font Request bit is set which is coupled to the processor as a request for more data. At the same time, the BTA Counter is enabled to count and the system proceeds to state 1 and waits for data from the processor.

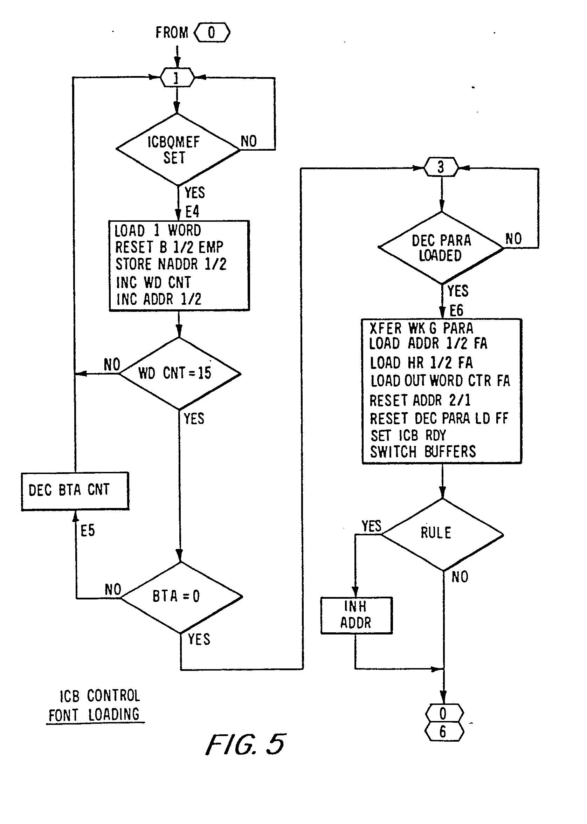

Data on the Out Data Bus, Fig. 3 are continuously clocked into the Receive Register 57. However, no data are transferred to the ICB 50 unless the ICBOMeF bit is set (Fig. 5) indicating that the processor is outputting a block of data to the ICB 50. Every clock after ICBOMeF goes high, a word is loaded into ICB1 (or 2) 50 from the receiver register 57.

Every time a word is loaded, (E4, Fig. 5) B1 (or 2) EMP is reset, indicating that ICB1 (or 2) is not empty, the word counter and the ICB address counter ICBAR1 (or 2) are incremented by one, and the complement of the current address is loaded into the ICB holding register ICBHR1 (or 2).

Next, the word counter is tested for a count of fifteen. If it is, then the BTA counter is tested for a count of zero. If the BTA counter is not counted down to zero, it will be decremented, and the system stays in state 1 to wait for more data from the processor.

If BTA equals 0 (Fig. 5), the number of blocks required to complete the character have all been retrieved. If, at this time Decompressor parameters have not yet been loaded (DecParaLd false), the system will enter State 3 and wait for the decompressor to become ready. If both BTA equals 0 and decompressor parameters have been loaded, the following will be performed at E6 of Fig. 5 and the system will return to State 0: Transfer parameters from the Next Parameter Register into the Working Parameter Register, load ICBAR1 (or 2) with the First Address, load ICBHR1 (or 2) with First Address, load Out Word Counter with First Address, clear ICBAR2 (or 1), Reset DecParaLd (Decompressor Parameters Loaded) Flag, set ICBRdy (ICB Ready), and switch buffers (to unload 1 and load 2 or vice versa).

As Control returns to State 0 for new parameters and data for ICB2, it also enters a pseudo State 6 (ICB Ready State) to unload ICB1.

If the next piece of information is imaginal the FontWUStgy bit is "0"; and Control will enter State 2 after loading OPC parameters. The loading of a "0" FontWUStgy bit sets the signal NextImag high to indicate that the next piece of information is imaginal. If ComfLvlLow (Comfort Level Low) is true at the same time, Control will generate an ICB Request signal to be transmitted as a wakeup to the Processor to request for ICB data.

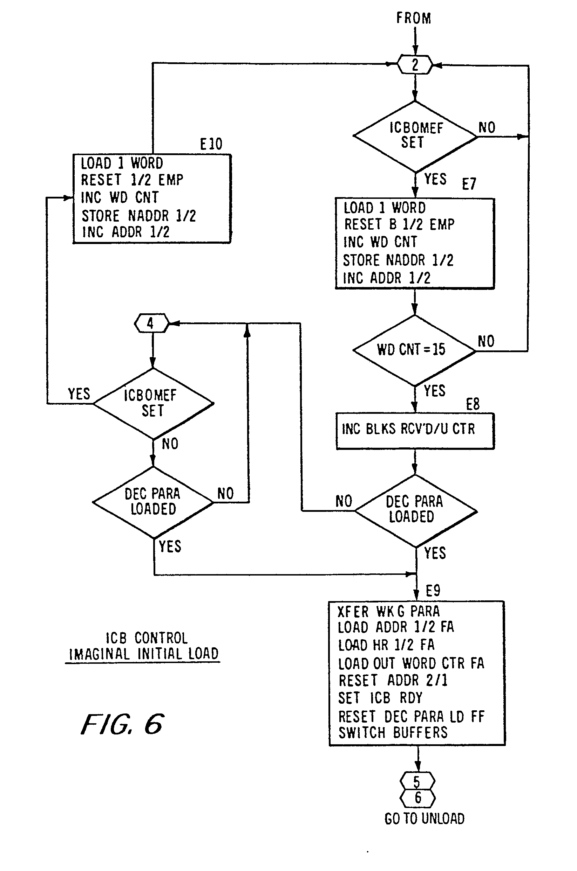

Control then loops in State 2 Fig. 6 for the Processor to output imaginal data. The loading for imaginal data is identical to that of font data. If the ICBOMeF Flipflop is set at E7, a word is loaded from the Receive REG into ICB2 (or 1), B2Emp (or B1Emp) is reset, the Word Counter is incremented by one, the complement of ICBAR2 (or ICBAR1) is stored into ICBHR2 (or ICBHR1), and ICBAR2 (or ICBAR1) is incremented by one. This repeats for 16 words at the end of which Control increments the BLKS RCV'D/USED (Blocks Received/Used) Counter by one. If at this time, Decompressor parameters have not yet been loaded (meaning the Decompressor is not ready), Control will enter State 4 and wait for the processor to output more data.

If more data arrive before the Decompressor is ready, Control will load one word from the Receive REG into ICB2 (or 1), reset B2Emp (or B1Emp), increment the Word Counter by one, store the complement of ICBAR2 (or ICBAR1) into ICBHR2 (or ICBHR1), increment ICBAR2 (or ICBAR1) by one, and re-enter State 2 to continue loading the remainder of the block of imaginal data in exactly the same manner as the first block.

At the end of the second block, the Blocks Received/Used Counter is again incremented by one, and the Decompressor checked for readiness.

If parameters have been loaded and the Decompressor is ready, Control at E9 of Fig. 6 will transfer parameters from the next Parameter Register into the Working Parameter Register, load ICBAR2 (or 1) with the First Address, load ICBHR2 (or 1) with the First Address, load 0 Word Counter with the First Address, clear ICBAR1 (or 2), reset DecParaLd Flipflop, set ICBRdy, switch buffers (switch to load 1/unload 2) and jump to pseudo State 6 to unload ICB2 (or 1) at the same time entering State 5 to wait for more data to be loaded into ICB1 (or 2). If both buffers become empty at the same time, one whole block will have to be loaded into one of the buffers before ICBRdy is set and the buffers switched to unload. When loading data blocks during memory-pipe clearing ICBRdy will not be set, buffers will not be switched and the data will be discarded.

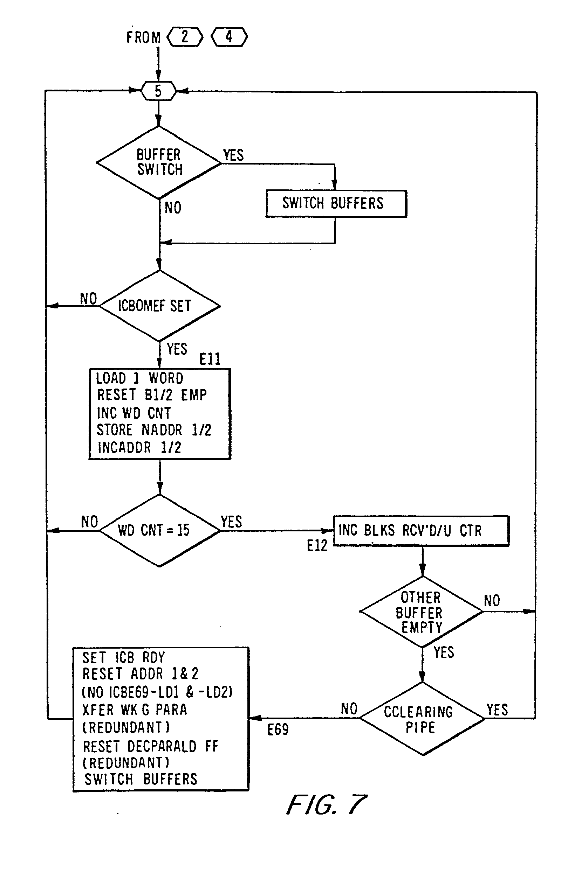

Loading in State 5, Fig. 7 is similar to loading in State 2 except for the fact that a buffer switch may occur in the midst of a data block, in which case Control switches to load 2/unload 1, and continues loading the remainder of the block into ICB2 (or 1) while unloading from ICB1 (or 2).

This ping-ponging process repeats for the entire band of imaginal data until the Decompressor issues a request for new parameters.

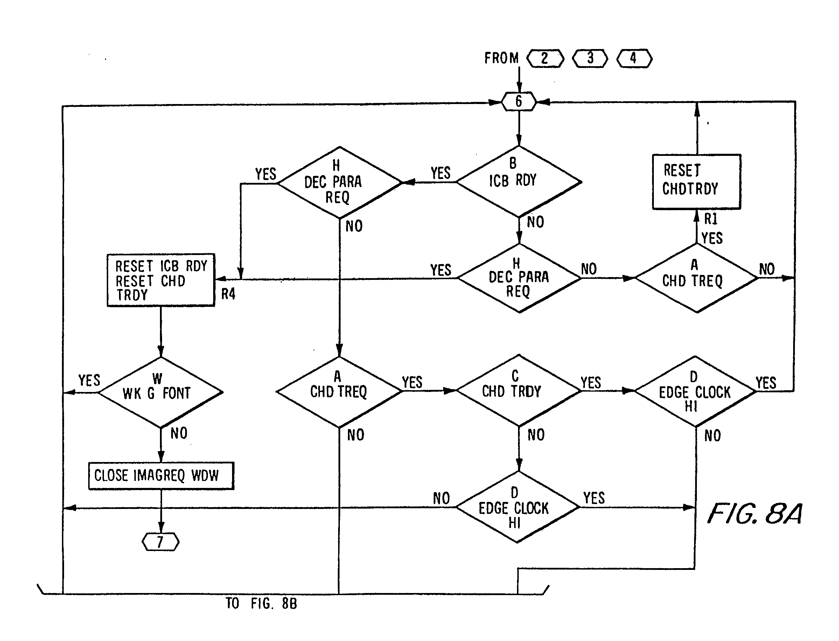

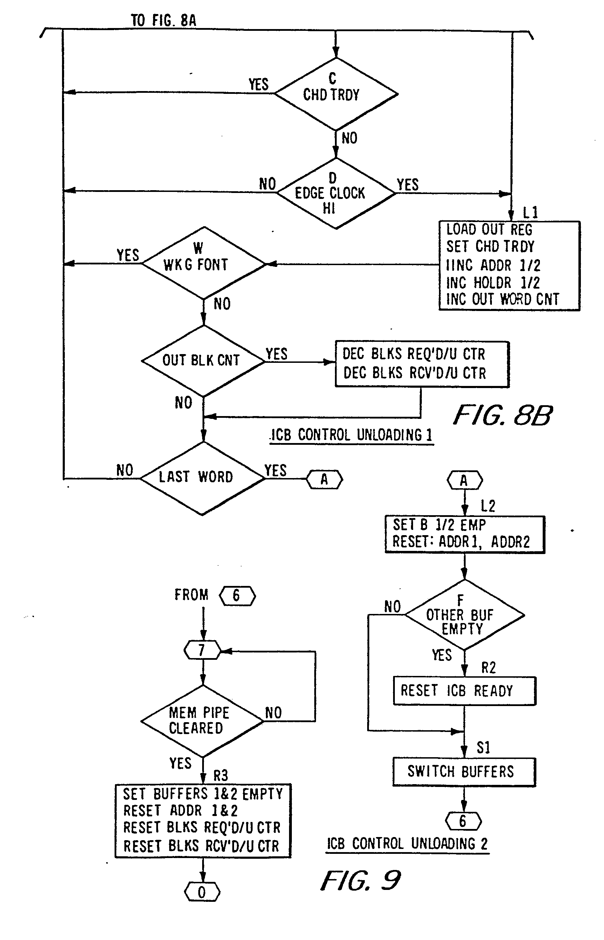

The unloading portion of the Control Fig. 8 is not incorporated into the Control PROM, ICB PROM 1 because it is operated with the faster EOM clock in order to interface with the Decompressor. Control enters into pseudo State 6 when ICBRdy is set, indicating that the ICB (1 or 2) had data ready to output to the Out Register.

Assuming that the Decompressor is not requesting parameters (DecParaReq=LO), and assuming that DChDtReq=LO (Decompressor Channel Data Request low meaning Decompressor is not requesting data), IChDtRdy=LO (OUT REG has no valid data), and ICBRoy=Hi (ICB has data ready to be output), a word will be loaded from ICB into the OUT REG at the same time setting the IChDtRdy Flipflop, incrementing the appropriate ICBAR and ICBHR by one, and incrementing the OUT WORD Counter by one.

The IChDtRdy Flipflop is operated with the EOM clock. In order to synchronize its setting with the loading of the OUT REG, the Edge Clock has to be monitored such that the IChDtRdy Flipflop can only be set when Edge Clock is high.

In the Imaginal mode (WkgFont=LO), every time a word is loaded into the OUT REG it is assumed to be "used", and the OUT WORD counter is incremented by one. The OUT WORD Counter is a modulo-16 counter which generates a signal OutBlkCnt (Out Block Count) to decrement both the BLKS REQ'D/USED and BLKS RCV'D/USED (Blocks Requested/Used and Blocks Receive/Used) Counters.

Also in the Imaginal mode, whenever a word is loaded into the OUT REG, The LstWd (Last Word) signal together with LstWdB1) (Last Word Buffer 1) and LstWdB2 (Last Word Buffer 2) (whichever is appropriate) is examined to see if the word being unloaded is the last word in the buffer (1 or 2) and if yes, to set either B1Emp or B2Emp, whichever is appropriate, to clear both ICBAR1 and ICBAR2, to reset ICB Ready if the "other" buffer is also empty and to activate a buffer switch.

Once IchDtRdy is set, Control loops in State 6 Fig. 8 waiting for a DChDtReq from the Decompressor. Since the Decompressor also operates on the EOM clock, DChDtReq may go high when Edge Clock is low, at which time IChDtRdy will be reset with the assumption that the Decompressor has taken the word in the OUT REG. No new word is loaded into the OUT REG since the clocks are out of phase. A new word will be loaded at the end of the next EOM clock cycle when Edge Clock is high.

When a DChDtReq arrives in phase (Edge Clock=HI) and IChDtRdy is set, a new word will be loaded into the OUT REG, again making the assumption that the old one has been taken by the Decompressor. IChDtRdy will again be set, or in effect remain set.

If DChDtReq goes high when IChDtRdy is low, the Input Channel Buffer has to wait for the right clock phase to load a word into the OUT REG and set IChDtRdy before the Decompressor can unload a word from the OUT REG.

When unloading the last word in a buffer and the other buffer is empty, ICBRdy will be reset. However, the last word still resides in the OUT REG. When DCh DtReq goes true in IChDtRdy will be reset making the assumption that the Decompressor has taken the last word in the OUT REG.

The unloading process continues until Decompressor issues a parameter request (DecParaReq), at which time, both ICBRdy and IChDtRdy are reset.

In the case where the information operated on has been Font data (WkgFont=HI), preloading has presumably been taking place in the other buffer. Control waits for ICBRdy to go true and buffers to be switched before unloading the other buffer.

If the information operated on has been Imaginal data (WkgFont=LO), Control will check and see if memory pipe is cleared to be sure that no ICB requests are backed up in the Processor memory pipe line. If the pipe line is not cleared (MemClrd=LO) Control enters State 7, Fig. 9 (Clearing Pipe) and waits for memory pipe to be cleared. The signal MemClrd (Memory Cleared) going true indicates that there are no more pending ICB requests. At that time, Control will set both B1Emp and B2Emp and reset the following counters:

ICBAR1

ICBAR2

Blocks Requested/Used Counter

Blocks Received/Used Counter

and return to State 0 to wait for new parameters. New parameters are necessary because preloading is not allowed when working on Imaginal data.

Both the Blocks Requested/Used Counter and the Blocks Received/Used Counter were mentioned in the above description. The Blocks Requested/Used Counter is incremented everytime ICB makes a request for data (ICBWUSent=HI), while the Blocks Received/Used Counter is incremented every time a block of data is received from Processor (WdCnt=15F), and they are both decremented when a block of data has been unloaded from the ICB into the OUT REG (OutBlkCnt=H1).

In the Imaginal mode, the output of the Blocks Requested/Used Counter is constantly compared with the output of the BTA Counter which is loaded with the Comfort Level. If the Blocks Requested/Used Count (Blocks requested minus blocks used) is less than the Comfort Level, the signal ComfLvlLow (Comfort Level Low) goes high to signify that more imaginal data is needed. If ComfLvlLow is low, no ICBReq will be generated.

Also in Imaginal mode, the outputs of both the Block Requested/Used Counter and the Blocks Received/Used Counter are constantly compared. A Comparison of the two outputs or a high ImageDone signal will indicate that no more imaginal data are forthcoming or, in other words, memory pipe is cleared.

The Input Parameter Buffer (IPB) of the EOM allows the storage media to hold parameters and previous line data (if any). The IPB is implemented with 256×4 RAMS and configured to accommodate a maximum of 512 words of 16 bits each. The data to the IPB are received through the standard processor interface in conjunction with a command decoder specifying that the data to follow are for the IPB. After all the data are received from the processor, the IPB distributes these data to the various modules within the EOM, contingent upon whether or not request for data is pending. After distributing this group of words, the IPB requests from the processor the parameters and previous line data for the subsequent character. This process continues until the software commands the IPB to halt (defined by bit 15 of the OPC Startup and Command Register).

The key functional blocks of the IPB are the following:

IPB Memory (512×16 words)

State Sequencer

State Save Counters/Registers

Control Proms

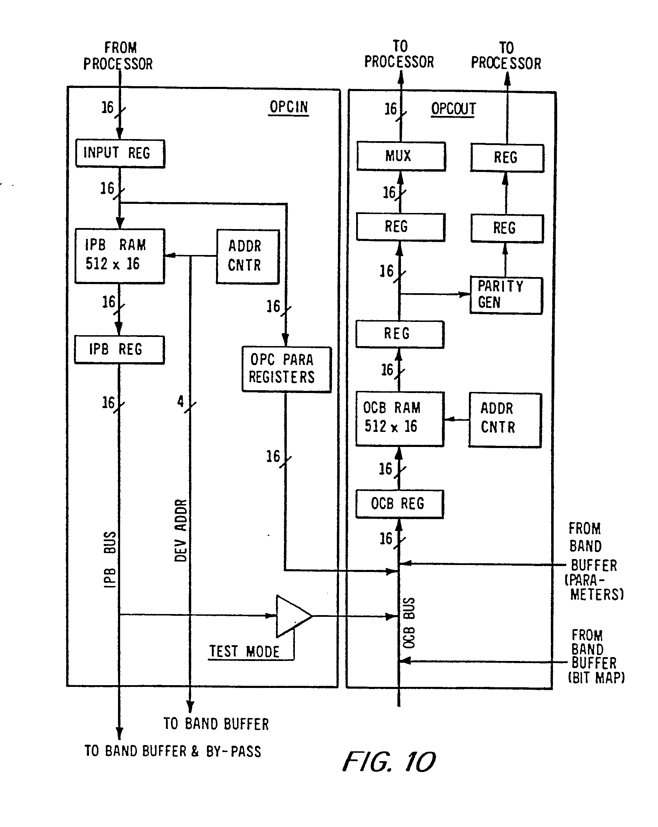

The Input Parameter Buffer (IPB) 51 of Fig. 1 shown in more detail in Fig. 10. It provides the necessary hardware (RAMS) to store up to a maximum of 512 words of 16 bits. In normal operation, the IPB provides the facility to store 9 words of parameter and a variable number (up to a maximum of 503 words) of previous line data. The 9 parameter words which describe the unique attributes of this particular font character or image are distributed to various portions of the hardware comprising the EOM when requests for these parameter are made and the IPB has received the parameters and previous line data (if any exist). The parameters are used in the EOM by the Output Port Controller Decompressor and the Bandbuffer. As contrasted to the parameters, the previous line data are only sent to the decompressor after the parameters have been distributed and request for previous line data from the decompressor has been received. During the transfer of the previous line data, the rate at which these data are sent out to the decompressor is controlled by the decompressor. In this mode, the IPB formats the data into a byte wide (8 bits) word and sends the most-significant 8 bits of a 16-bit memory word first followed by the least-significant 8 bits of the same memory word. This process is repeated for each word sent to the Decompressor. The byte formatted by the IPB is sent to the decompressor over the lower 8 bits of the 16-bit IPB data bus. The IPB remains in this mode until the decompressor drops the control line (PLRdy). In the case where the decompressor requires the previous line data to be repeated, the decompressor sends a signal to the IPB to repeat transmission. Upon receipt of this signal from the decompressor, the IPB reloads the IPB address counter to address 09 (beginning address of previous line data) and repeats the transmission sequence to the decompressor. When the IPB senses that the decompressor is done (PLRdy going low) the IPB exits this mode and requests parameters and previous line data for the next character.

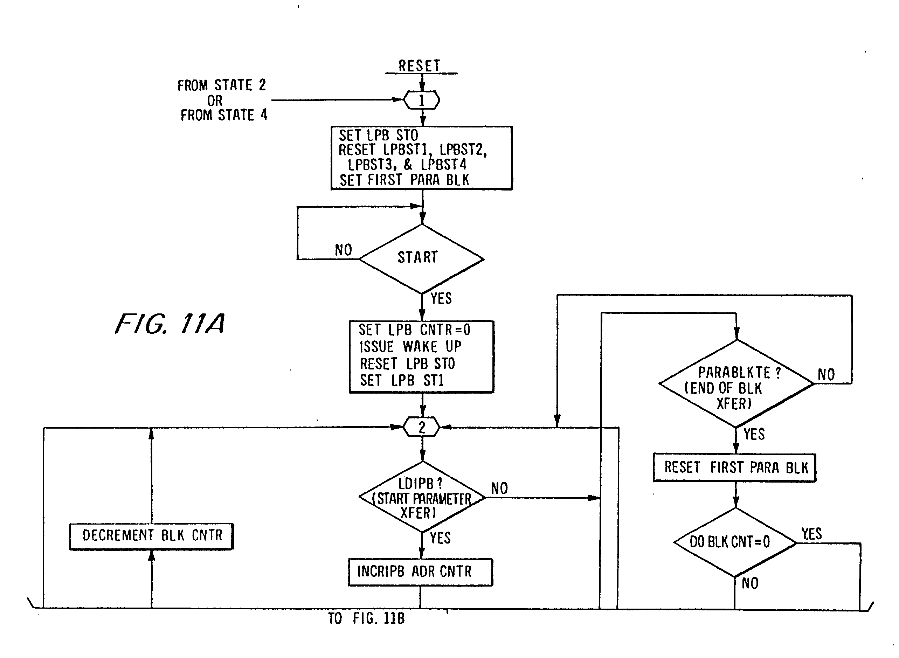

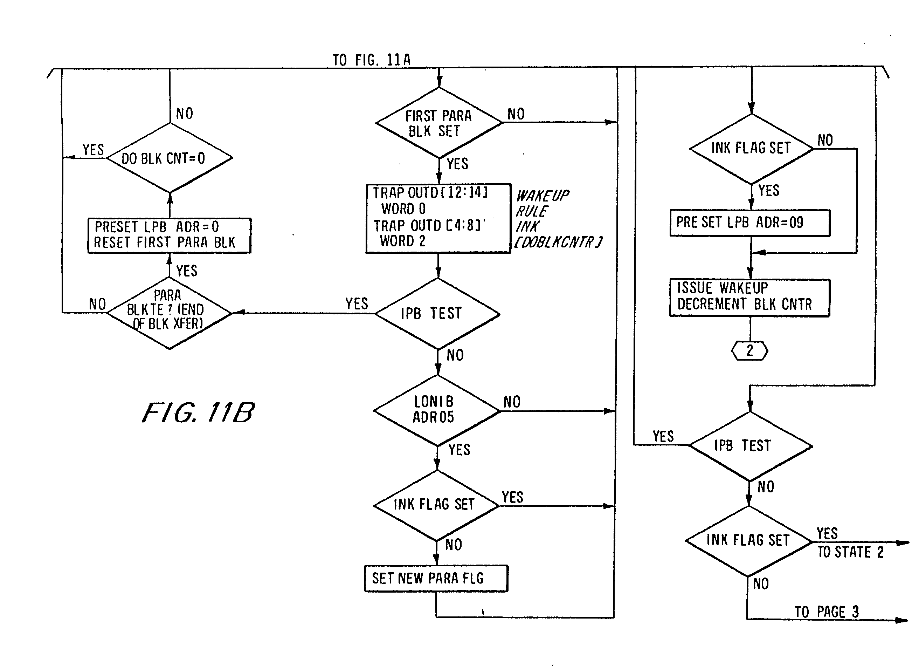

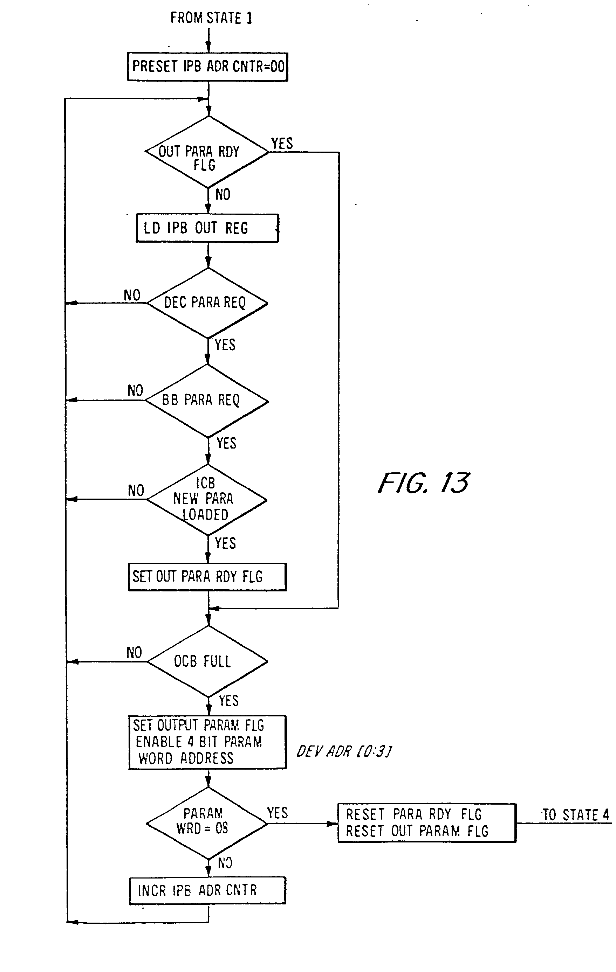

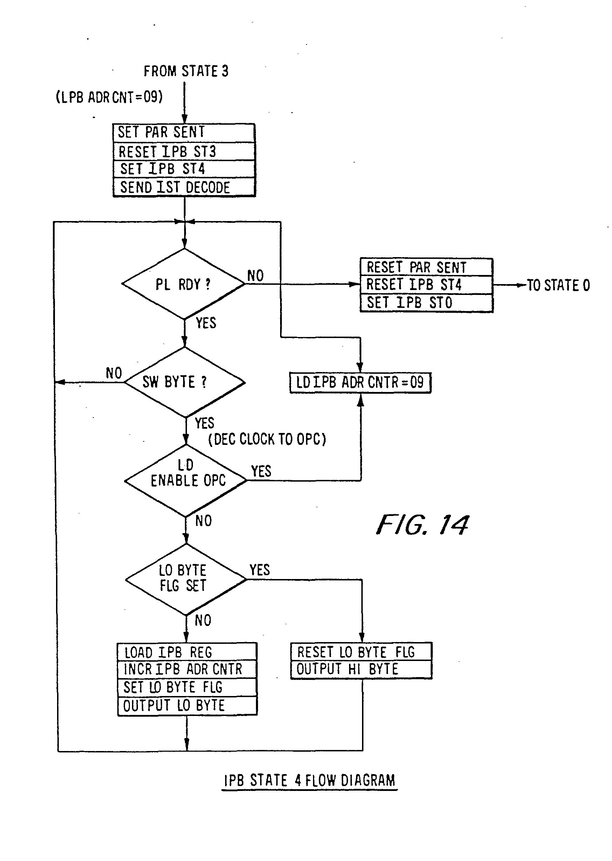

The state sequencer of the IPB, (Figures 11, 13 and 14) is comprised of two PROMs whose function is to control the various modes of handling the data received and sent by the IPB. The state sequencer defines one of four possible states of the IPB (State 0—State 4). State 2 is not used. Sequencer state 0 is the idle state where no action is taken by the IPB as long as the "start" bit of the OPC command word (bit 15) is set to a "0". If the start bit is set to "1" the IPB exits sequencer state 0, issues a request for a block of parameter data and enters sequencer state 1. In this state the IPB receives data from the processor and exits this state and enters sequencer state 3 after all required data are received while the IPB is in sequencer state 1. Sequencer state 3 defines to the IPB that parameters have been received and that they may be distributed on request by the users within the EOM. After the parameters are distributed the state sequencer exits state 3 and enters sequencer state 4 and remains in this state to distribute previous line data to the decompressor. The state sequencer exits state 4 and enters sequencer state 0 to begin the cycle for the next character.

In summary the various states of the sequencer are are follows:

State 0—Idle state—Exit state and enters state 1 if start bit of OPC Command word is set to "1". (On leaving this state and entering State 1 a request for a block of parameter data is issued to the DO processor).

State 1—Receives data from processor (parameter and previous line data).

State 3—Distributes the first 9 words of the parameter buffer to various sections of the EOM upon request. Exits this state and enters state 4 when parameter words are distributed.

State 4—Distributes previous line data to the decompressor. Exits this state when decompressor receives all required data and enters state 0.

During the time that the IPB is in sequencer state 1 and receiving the first parameter block, bits 0 through 7 are compared with bits 8 through 11 and the smaller of the two values are stored in a register for use by the Input Channel Buffer (the comparison is made contingent upon the value of bit 12 being set to a "1"). If bit 12 is set to a "1" the value represented by bits 8 through 11 are unconditionally loaded into the register. This 4-bit quantity represents the number of blocks that the Input Channel Buffer must request for this band, or it represents the number of blocks of data to maintain in order to satisfy the input comfort level. Additionally, bits 4 through 8 of word 2 of the first parameter block are loaded into a counter which represents the number of blocks of additional data that the IPB must request for this particular character.

During the time that parameters are being distributed, the IPB stores word 0, word 1, and word 2 into working registers or counters. The variable quantities (dynamic variables whose values are determined by this particular character) are loaded into counters and static parameters which have not been saved earlier are loaded into registers. The variable quantities are represented by bits 0 through 7 of word 0, bits 0 through 11 of word 1 and bits 0 through 3 of word 2. Bits 0 through 3 of word 2 are appended to the 12 bits of word 1 to represent a 16-bit counter whose value is incremented each time that a word carry (4 nibbles used) is generated by the decompressor. The 4-bit field from word 2 represents the number of words used by the decompressor, and the 12-bit field of word 1 represents the number of blocks used by the decompressor. In addition when the 4-bit field of word 2 (word counter) generates a carry out (one block used), the carry bit is used to decrement the 8-bit field of word 0 and increment the 12-bit block counter. This 8-bit field represents the number of blocks of compressed data remaining to be processed for this character. During a state save (the process of saving parameters when a band boundary is encountered—occurs simultaneously with parameter distribution) these variable and static parameters are sent to the Output Channel Buffer where they are subsequently returned to the processor.

The control PROMs associated with the IPB are used to set a number of conditional flags to define to the IPB and to other sections of the hardware in the EOM what event is about to take place. These PROMs are controlled by the state sequencer. IPB address counter external inputs from the decompressor or bandbuffer or from the OPC Command register. The conditional flags set as a function of the prom outputs define the following:

Receiving the first parameter block

Load IPB address counter with "00" or "09"

Send parameter words

Send previous line data

Received new block of parameter

The flag defining the first parameter block is used exclusively to load registers or counters with certain fields of the first parameter block as they are simultaneously being loaded into the IPB as described earlier. The address counter is loaded with "09" only if the previous line is to be repeated, at all other times the flag defines load address counter to "00". "Send parameter" defines the period at which the IPB sends parameter data to the OPC, decompressor and to the band buffer. The last conditional flag new block of parameters defines to the Input Channel Buffer that new parameters have been received and can be used to begin processing this character.

The Output Channel Buffer (OCB) provides the storage media to hold parameters on a state save, last line (synonymous to previous line in the IPB) or bitmap data from the bandbuffer. In the test mode, the OCB is used to hold test data whose source can be either the Input Channel Buffer or the IPB. The OCB is organized similar to the IPB configured to accommodate a maximum of 512 words of 16 bits. The normal data source for the OCB is derived from the Input Port Controller decompressor or the bandbuffer. All data for the OCB are merged into a common 16-bit bus (OcbBus 0:15). The interfacing of data from the OPC to the processor is implemented using the standard processor interface. Quantities which can be read by the processor from the OPC are the following:

Low Task Status

OPC Status

ROS Status

ROS Startup and Command

OPC Startup and Command

Output Channel Buffer ID

Wakeup Type

The major functional blocks of the OPC are the following:

OCB Memory (512×16 words)

State Save Counters/Registers

Data Multiplexors

Processor Interface

Request For Service

Control Logic (Proms)

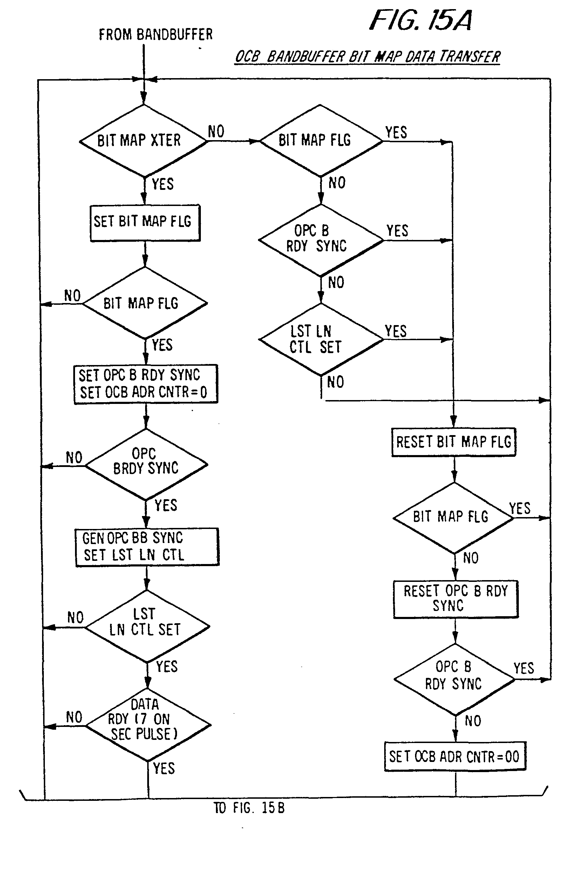

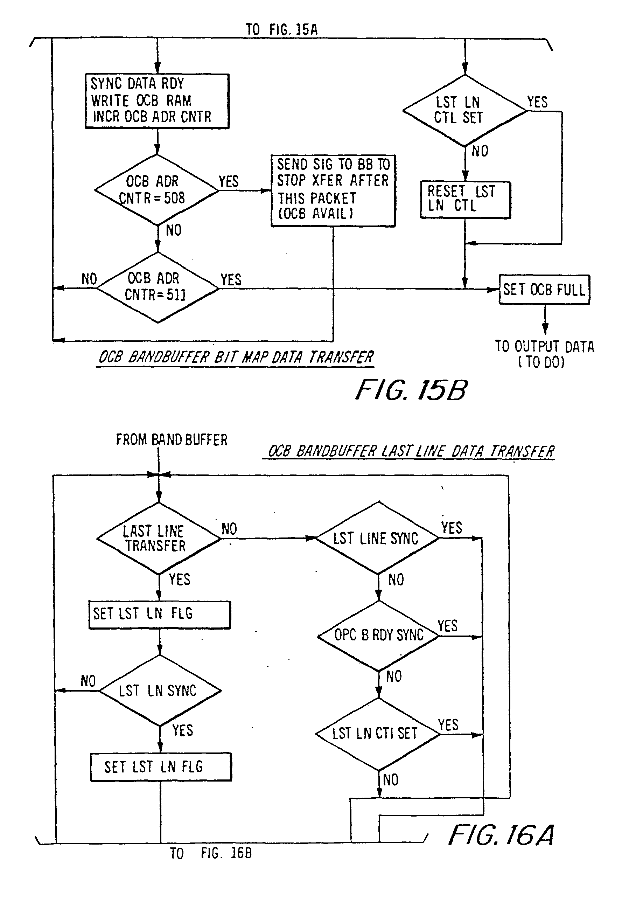

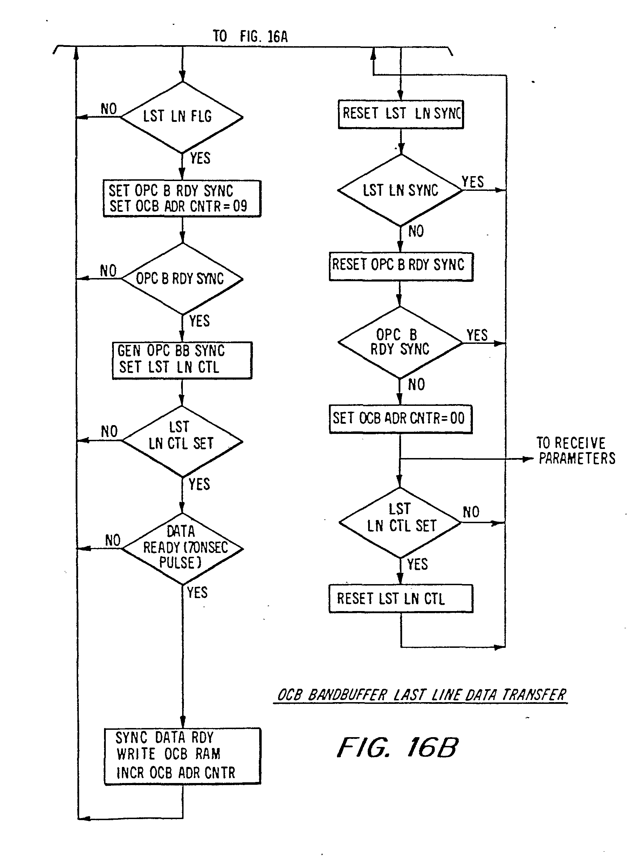

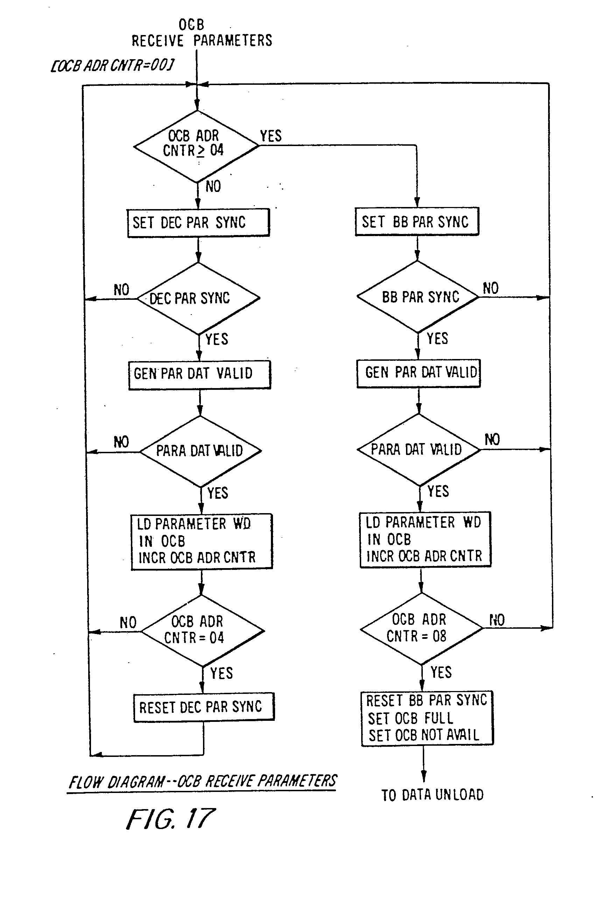

The OCB provides memory storage capacity up to 512 words of 16 bits. In normal operation this memory is used to store state save parameters, last line or bitmap data, Figures 15 through 17. Last line data as used in this context are defined as the variable number of words for the particular character being processed which must be stored by the EOM whenever a band boundary condition is encountered. The last line data are loaded into the OCB starting at location "09" whenever the bandbuffer raises the last line transfer flag and also signifies to the OCB that there are valid data present. The starting location of OCB address "09" is pre-loaded when the last line transfer flag is initially sensed. Each time that the bandbuffer signifies that data are valid, the data are written into the OCB. This process continues until the bandbuffer drops the last line transfer flag. The last line transfer flag, in addition to its indicating last line data, also prevents the IPB from distributing parameters until all the last line data are received from the bandbuffer. This restriction is imposed on the IPB because as the new parameters are distributed, the old parameters are saved in the OCB. When the last line transfer flag is dropped the output control logic loads the five most-significant bits of the OCB address counter into a register. This five-bit quantity represents the number of blocks that must be sent back to the processor and on state restore (for IPB) represents the number of blocks to request to continue processing this character. In addition to loading the number of blocks used in the OCB, the OCB address counter is simultaneously pre-loaded to address "00". This new address is pre-loaded to receive the 9 parameter words during a state save. Similar to the IPB, the OCB reserves the first 9 locations for parameters only. These locations are reserved only if parameters are to be saved. After the last line transfer flag is dropped, both the IPB and OCB are ready to transfer parameters (i.e. IPB outputs new parameters and the OCB receives current parameters). When the IPB sends out parameter words 0, 1 and 2 the OPC sends the corresponding words of the current parameter to the OCB. As new parameter words 2, 3 and 4 are sent to the decompressor only words 3 and 4 of the current parameter are returned by the decompressor (word 2 is shared by both the IPC and decompressor but returned only by the OPC). As parameter words 5 through 8 are sent out by the IPB the corresponding current words are returned by the bandbuffer to the OCB. When the OCB is loaded with the last parameter word a flag (OCBFull) is set to indicate that the OCB contains all the data necessary to continue processing this character in the next band. The data that are loaded into the OCB are now ready to be transferred to the processor. Similar to the last line data transfer, bitmap data are loaded in the same manner, with the exception being that the bitmap flag is raised and data are loaded from OCB address "00" and continues until one of two events occur.

First if the bandbuffer data exceed the capacity of the OCB (512 words), the OPC indicates to the band buffer that the OCB is full and to terminate bitmap data transfer. The transfer of further data is suspended until all the contents of the OCB are sent to the processor, at which time the bandbuffer is again notified that the OCB is available for more data. The second condition that can terminate transfer of bitmap data is defined by the bandbuffer whenever all the bitmap data for the current band have been exhausted. When this condition exists, the bandbuffer drops the bitmap data flag and the OCB terminates similar to the last line flap termination except that the present contents of the OCB are ready to be transferred to the processor.

On a state save, bits (0:7) of parameter word 0 is the 8-bit counter value returned to the OCB which represents the number of blocks of compressed data remaining to be processed for this character. Bits (8:15) are loaded into a register and returned unmodified. Bits (0:11) of parameter word 1 are a 12-bit clock pointer. It was initialized to point to the block of data which is used first for this character. When saved, it has been updated to reflect the data used during the current band. Bits (12:15) of this word are always returned with their received values unchanged. Bits (0:3) of parameter word 2 are a 4-bit word pointer. It was initialized to point to the word of data within the first block which should be used first for this character. When saved, it has been updated to reflect the data used during the band. Bits (4:8) is a 5-bit counter value returned, which represents the number of blocks to send back to the processor and the number of blocks to request on a state restore. Bits (9:15) of this word are loaded into a register and returned unmodified. The remainder of the parameter words are returned by either the decompressor or the bandbuffer.

The following describes the hardware structure implemented for requesting service from the processor input parameters/data or output parameters/data. Initially, after power-on or I/O reset, the IPC and OPC are reset to a stand-by state (IPB state 0), and remain in this state until the OPC Startup and Command register is loaded with bit 15 set to a "1" (start bit). This indication causes the IPC to exit state 0 and enter state 1 and simultaneously activate the control line to the wakeup logic. This control line (IPBReq) remains active until the wakeup logic returns an acknowledge signal which resets IPBReq. When the block of data for this request is received from the processor, a 5-bit field in word 2 of this block is loaded into a counter (described earlier). This 5-bit value defines the remaining number of blocks of data associated with this first block which must be accessed from the processor before processing this character. After the first block of data is received, and providing that the 5-bit counter value is non-zero, another request for service is issued to the wakeup logic, the 5-bit counter is decremented by one count and as before the request remains active until acknowledged. When the 5-bit counter value is depleted to "0" requests for service are terminated and this Bit Map is processed. After this character is processed the IPC will again enter state 0 and, if the start bit is still set, the process repeats itself.

For sending parameter/data from the OCB to the processor the processor is initiated by the control signal (OcbFull). This signal causes the OPC to issue a request for output service (OCBReq) and remains active until reset by the acknowledge signal from the wakeup logic. Similar to the input parameter request after the block of data is sent to the processor, a determination is made for a zero or non-zero value on a 5-bit counter representing the number of blocks required to be sent back for this character. If non-zero, another request is issued to the wakeup logic, the 5-bit counter is decremented by one count, and the sequence repeats itself until the 5-bit counter value is depleted to zero. Whenever the 5-bit counter value reaches zero, and the last block of data is sent to the processor, request are terminated and the control signal OcbFull is reset to indicate that the OCB is available to accept more data. Five unique request lines are sent to the wakeup logic from this section of the hardware. The five request lines and their meaning are as follows:

| | |
|---|---|
| OCBReq | First request representing last line data |
| COCBReq | Continuation of last line data |
| IPBReq | First request for input parameters/data |
| CIPBReq | Continuation of input parameters/data |
| BitMapReq | Request to output bit map data |

Each of the above five request lines to the wakeup logic result in a unique code specifying the wakeup type to the processor and the type of service being requested.

The outputs of the control PROMs define to the OPC the type of data being received (last line or bitmap), the initial value to be loaded into the OCB address counter, when to load the number of blocks stored in the OCB and when the OCB has data that must be sent back to the processor. The primary inputs to the control PROMs are derived from external inputs from the bandbuffer and the OCB address counter. In the normal mode the last line flag or bitmap flag is set when the bandbuffer raises either the last line transfer or bitmap transfer control signals provided that the OCB is empty. Initial values to be loaded into the OCB address counter is determined as follows:

Address "00" is loaded whenever the last data word of either Last line or bitmap data is received or when the last parameter word is received or when the last word of data from the OCB is sent out to the processor or a reset condition.

Address "09" is loaded only at the beginning of the last line data (reserves first nine locations for parameters).

The flag that determines when OCB data is to be sent to the processor is determined by OcbFull (does not imply that OCB is loaded with 512 words). This flag is set under the following conditions:

Last parameter word received

Last word of bitmap data received

OCB address counter=511 (max. capacity)

The conditions required to load the number of blocks to be returned to the processor are the following:

Last word of either last line or bitmap data received

OCB address counter=511 (max. capacity)

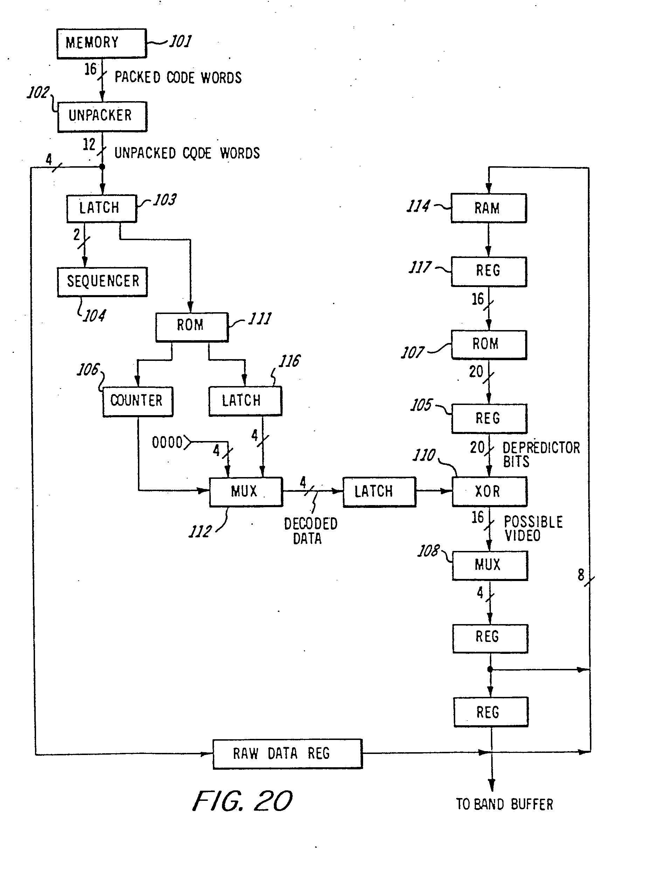

Figure 20 is an overall block diagram of the decompressor. Compressed data in the form of four-, eight-, and twelve-bit words are packed into a sixteen-bit memory 101. On sequencer 104 command these sixteen-bit words are input to the unpacker 102 which separates the data into four-, eight- or twelve-bit code words. The unpacker 102 comprises a two-level sixteen-bit pipeline from which code words are extracted. The output words are latched out through latch 103 to the decoder ROM 111. Also, the two most-significant bits, which indicate the length of the code words, are coupled to the sequencer 104. This sequencer 104 tracks the movement of the data in the unpacker 102 pipeline and requests a new word from memory 101 when space in the unpacker 102 pipeline becomes available.

The counter 106 is set by ROM 111 to the count of the number of four-bit all-zero nibbles in the current run length and will control the multiplexer 112 to output an all-zero nibble on each clock pulse as it is counting down. At the same time, latch 116 is loaded with a decode of the nibble of image data that terminated the run. At a count of zero, the terminating nibble in latch 116 is selected by multiplexer 112. The resultant multiplexer 112 output is now decoded, and is ready for deprediction.

The next function to be performed is the production of image bits at the multiplexer 108 based on a comparison of the depredictor bits from ROM 107, and the decoded bits from multiplexer 112. This comparison takes place in two stages, and produces four output image bits per clock period.

The first stage uses nine image bits for each of the first three current bits, and eight image bits for the fourth from register 117 to address the ROM 107 to produce four sets of four possible depredictor bits. These are stored in register 105.

The second stage compares all depredictor bits with their corresponding decoded data bits to produce four possible image bits for each current bit. Then a multiplexer controlled by the last two (previously unused) pattern bits selected the four image bits for output to the RAM 114 and band buffer. In fact, the last pattern bit for each current bit is not available at the beginning of this second clock period, but becomes available during the clock period. Therefore, this multiplexer circuit 108 is implemented from high speed devices to allow the signals to ripple through in one clock period.

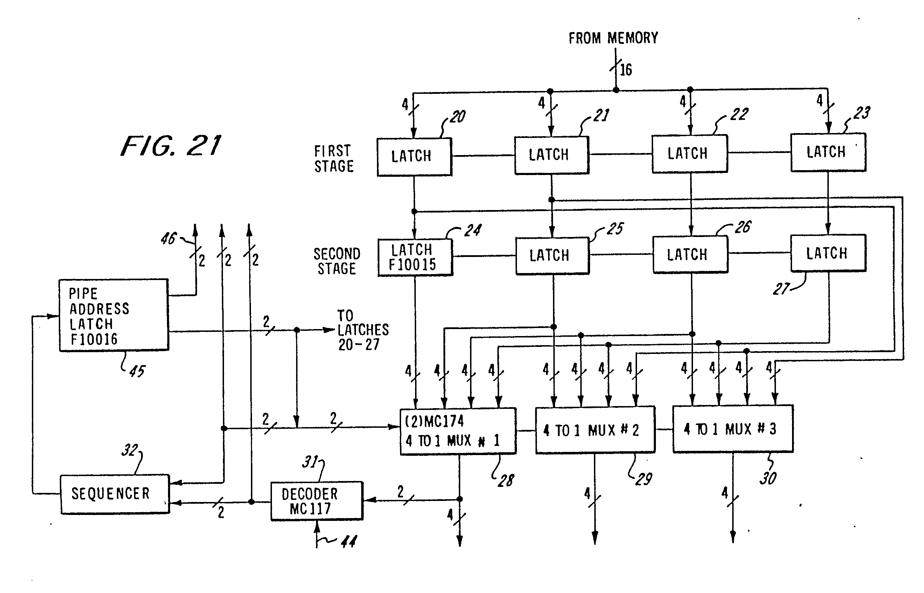

A discussion of the circuit details follows. The first function is the unpacking of the code words and is accomplished in the circuit of Figure 21. Sixteen-bit data words are received from memory which contain code words four-, eight- or twelve-bits in length. These code words start on any four-bit nibble boundary, so that the eight- and twelve-bit code words frequently overlap the sixteen-bit data word boundaries. By putting the data words together into an unlimited string of four-bit nibbles, and then separating the string into discrete four-, eight- or twelve-bit code words, the output of the original encoder can be recreated.

When, through the operation of the remainder of the circuit in Figure 21, the first stage latches 20, 21, 22, 23 become empty, the next sixteen-bit data word will be loaded from memory. Likewise, when the second stage latches 24, 25; 26, 27 become empty, the first stage word is shifted, in parallel, into the second stage, and a new word is transferred from memory into the first stage. Finally, twelve-bit multiplexer 28, 29, 30, implemented from three four-bit multiplexer devices, and under sequencer 32 control, will select from the latches the next four-, eight- or twelve-bit code word.

To explain the operation of this circuit by way of example, assume that the first four bits of the first code word are in latch 24. Then, if it is a four-bit code, the contents of latch 24 will be multiplexed out through multiplexer 28 as the first code word output. Similarly, eight- or twelve-bit words in latches 24, 25 or 24, 25, 26, would be multiplexed out through multiplexers 28, 29, or 28, 29, 30, respectively.

In the worst case, the first twelve-bit code word would be latched out from latches 24, 25, 26. On the next clock pulse, the next twelve-bit code word would be multiplexed out from latches 27, 20, and 21.

Whenever the second stage becomes empty, the first stage word is shifted down into the second stage, and a new data word shifted into the first stage. Thus, two stages, each sixteen-bits wide, must be provided.

The first two bits of the code word, always available at the output of multiplexer 28, specify the number of bits in the code word. These bits are decoded in decoder 31, and are then input to the sequencer 32 which computes the location of the next code word in latches 20 through 27, controls the multiplexer 28, 29, 30 to output it, and controls the latches 20 through 27 to shift a data word from the first to the second stage if necessary. In fact, the data from latches 24, 25 and 26 are always loaded into multiplexers 28, 29 and 30, but the decoder 31, in response to the two leading bits of the multiplexer 28 output word, will prevent the irrelevant data from being latched out from multiplexers 29 and 30 whenever appropriate.

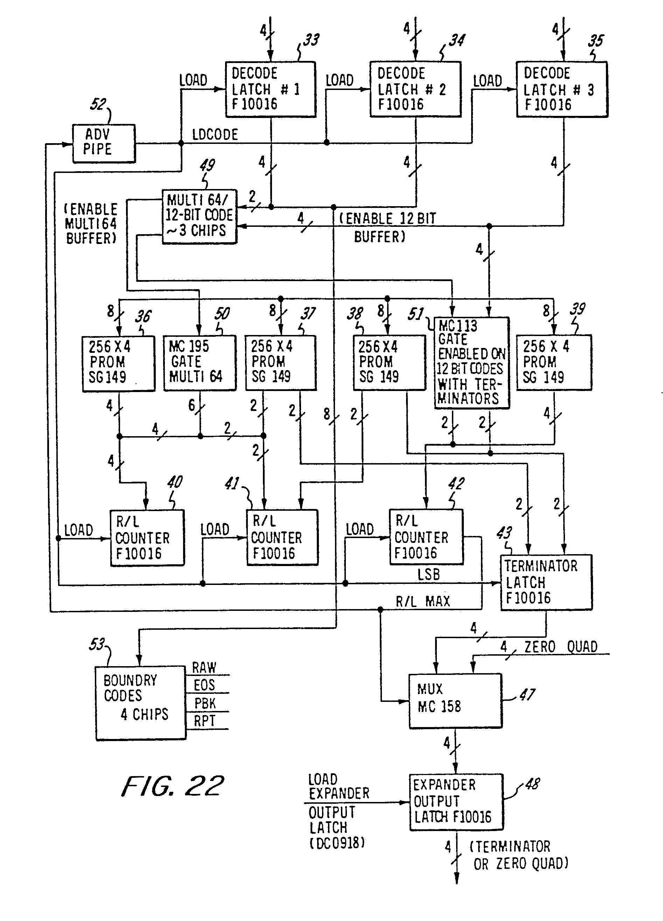

The output of the Figure 21 multiplexer 28, 29 and 30 is coupled to the decode latches 33, 34, 35 of Figure 22, the outputs of which are used to address PROMs 36 through 39 which decode the code words into their associated run lengths and terminating nibbles. The run length portion of PROM 36, 37, 38, 39 output is used to set the twelve-bit run length counter 40, 41, 42 and the four-bit terminating portion is temporarily stored in the terminator latch 43. Gate 50 ensures that the six most-significant bits of the counter 40 and 41 are forced to zero, because the run lengths are less than 64.

An alternative to the reception of compressed data is that the data words being received from memory are raw image data. In this case, nibbles are shifted one at a time through the system. The decoder 31 of Figure 2 is locked up by an input on the raw data control signal input line 44 into a mode where a constant output to the sequencer 32 results in a simple cycling of the latch 24, 25, 26, 27 outputs through multiplexer 28. Therefore, in this raw data mode, the two bits usually coupled from the multiplexer 28 to the decoder 31 are ignored.

In all cases, the "pipeline" comprising latches 20 through 27 is controlled by a pipeline address latch 45 which receives the next "address" from the sequencer 32 and controls the multiplexers 28, 29, 30 to select the correct latch output from up to three of the six latches 20, 21, 24, 25, 26 and 27. The sequencer 32 will "promote" a data word from the first to the second stage when the initial nibble is in the second stage before the promotion, and will simultaneously send a data request through the data request line 46 to the memory.

The decoded data in the form of a count in the counter 40, 41, 42, of Figure 22 and the terminating nibble in the latch 43 must be output to the depredictor. First, on every clock pulse, an all-zero four-bit nibble is shifted out through multiplexer 47 and output latch 48, and the counter 40, 41, 42 is decremented. When the counter 40, 41, 42 reaches zero, the terminating nibble is shifted out through latch 43, multiplexer 47 and latch 48.

As described above, if the number of all-zero nibbles exceeds sixty-four, a second twelve-bit code word is required. In this case, the decoder 49 of the twelve-bit multiplexer code is used to disable gate 50 which allows the PROM 36 and 37 outputs to be loaded in the most-significant six bits of the counter 40 and 41. Gate 51 also couples the terminator nibble from latch 35 to terminator latch 43 when the last four bits of the code word comprise an actual four-bit image nibble.

When the counter 40, 41, 42 counts through to zero, a signal is sent from counter 42 through gate 52 to the latches 33, 34, 35 so that on the next clock, at the time that the previous terminator is latched into output latch 48, a new run length and terminating nibble will be loaded from latches 33, 34, 35 into counter 40, 41, 42 and terminator latch 43.

At all times the eight bits from latches 33, 34 will be coupled to decoder 53, but only when that eight-bit code word is a control code, one of four outputs will be generated to alert the remainder of the system that a code word signifying raw image data, a prediction break, a repeated line, or an end-of-scan has been received.

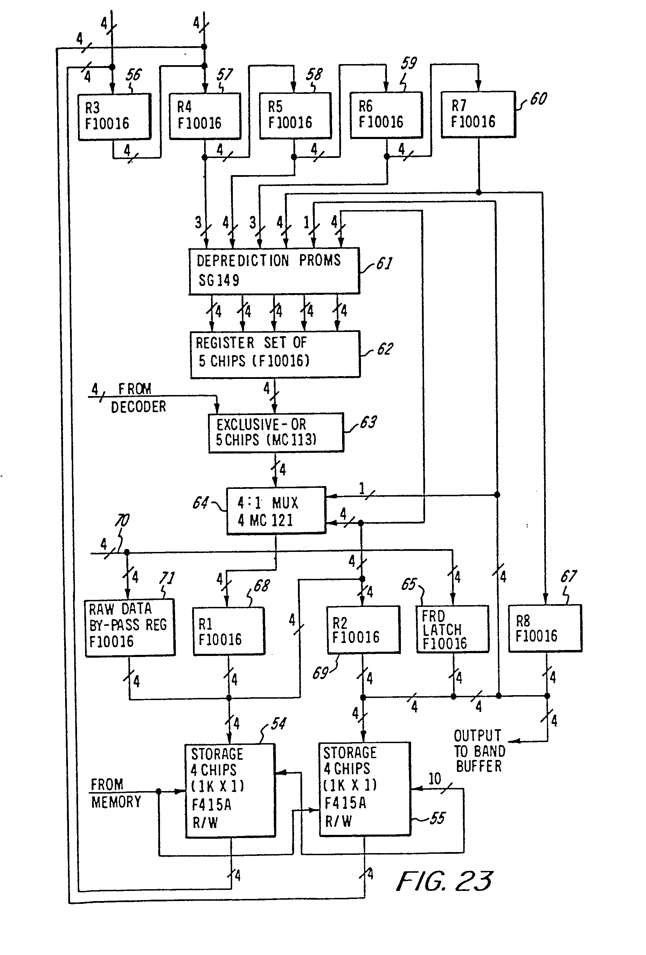

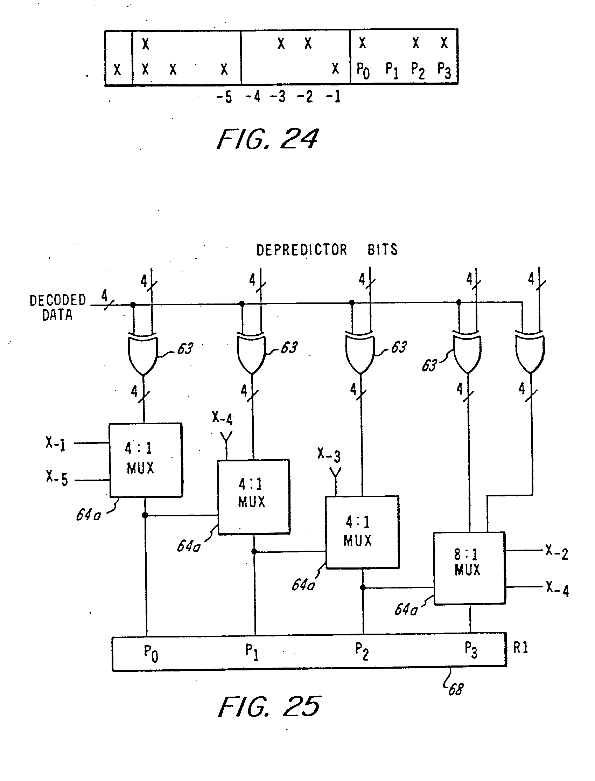

The depredictor circuit is shown in Figures 23 and 25. As explained above, the original predictor inspects selected bits in the current line and the previous line during the prediction process. The exact pattern used in the predictor of the described embodiment is shown in Figure 24, where the instant bit PO is predicted after an inspection of the eleven image bits of the current and previous lines marked "X".

The deprediction process, which will be described below, results in the creation of image data line by line, the previous line of which is available in the RAMs 54, 55. This previous line of image data is taken from the RAM 54, 55 eight bits at a time, and used in the deprediction process. Several clocks later, the newly reconstituted image data of the current line is loaded into the same locations. Thus, the last line is always available in the RAM 54, 55.

The data from this circuit output are also sent to band buffers in each of which is loaded image data for sixty-four scan lines. One buffer will be driving the raster output scanner or equivalent while the other is being loaded from the output line of Figure 23.

Each band buffer is loaded a segment at a time, where a segment is defined as that area of the buffer corresponding to one letter font or one image. Then, the most efficient method of loading the buffer is, in the case of a character, to generate the font, line by line, in a character generator which produces the font in compressed form; decompress the font in the circuit of Figures 21, 22 and 23, and output it to the band buffer. Images stored in compressed form are handled in an identical decompression process.

Sixty-four scan lines per buffer are provided as a compromise. In a smaller buffer there would be a decreased likelihood that an entire character font would be stored in a single buffer, increasing the likelihood of a character overlap between buffers. When this happens, the system hardware and software has to handle the overhead involved in locating the character in the buffer several times and storing the last image line (for deprediction) between buffer fills. In the other direction, larger buffers simply require more memory. Images almost always overlap the buffers because of their larger size in any case.

The RAMs 54, 55 contain 8K bits, and can be controlled to maintain the last line of any segment or segments up to this capacity between buffer fills. The last line data for several overlapping characters, may therefore, be saved between buffer fills, reducing overheads.

As shown in Figure 24, the original prediction process uses the image bits of the previous line and the current line marked X to predict the current bit PO. If the prediction fails, the predictor outputs a 'one', and if the prediction is successful, the output is a 'zero'. Similarly, in the depredictor, first the PO bit is determined using the actual image data, already depredicted, in the previous and instant lines, and the pattern of Figure 24. Then the corresponding bit output from the decoder is compared to it. If PO and the corresponding decoder output bit are equal, the image bit should be a 'zero', and if different, should be a 'one'. In this way, the original image data are reconstituted.

The actual deprediction process is slightly different from that described above because bits are processed at a rate of four bits per clock to increase the speed.

First, if the image segment is an overlap from the previous band the last line of video either must have been saved in the RAM 54, 55 from the last band buffer loading, or must be loaded in from memory.

The last line of pattern data is loaded from RAMs 54, 55 into register 56, 57, eight bits in parallel, on every other clock. On every clock, shift register 56—60 data is shifted right four bits. The bits are available to address ROM 61. In addition five bits of current·line image data are coupled to ROM 61, four bits from register 68 and one bit from register 69. Thus, all bits in the pattern for the deprediction of the three P bits, P0—$P_2$, of Figure 24 are available except specifically, X-5 and X-1 for P0, X-4 and P0 for $P_1$, X-3 and $P_1$ for $P_2$ and X-4, X-2, and $P_2$ for $P_3$.

·The available pattern bits at the address lines of ROM 61 enable the ROM 61 to output five sets of four possible depredictor bits to register 62 during the first clock period. In effect, the ROM 61 and register 62 are the first stage of a two-stage pipeline.

The second stage comprises a set of possible exclusive OR gates 63, multiplexers 64, and register 68, drawn in more detail in Figure 25. The five sets of possible depredictor bits are XORed against the four bits of decoded data to produce five sets of four possible video bits. Then the 4:1 multiplexers 64A, controlled by the appropriate pattern image data bits select the one of four. $P_3$ is selected by use of an eight to one multiplexer 64B. The circuit ripples through, to produce four bits of image data which, in Figure 23, are then available for loading into registers 68 and 69 for subsequent loading in RAM 54, 55 to complete the cycle.

The output to the band buffer is normally taken from register 69. If the band buffer (64 scan lines) limit is reached and there is still more of an image segment to be processed, the last line of image data is saved in the RAM 54, 55 as usual and in addition is sent to the memory for storage. Having thus written one segment, a character font or an image, into the band buffer, the process will be repeated for the next segment. When the band buffer is completely filled, it is used to drive the output printer, and the circuit begins to load the other hand buffer.

The registers 56 through 60 contain the previous line of image data for the prediction process and receive data either from memory on the first line of a band, or from the RAMs 54, 55 within a band. The source of RAM 54, 55 data is registers 68, 69. The circuit is implemented so that on every clock, register 68 data are shifted into register 69, on every other clock eight bits of data are read from the RAMs 54, 55 to register 56, 57 and on the remaining clocks, data are written from registers 68, 69 to the RAMs 54, 55. As previously stated, the write pointer is a few addresses behind the read pointer so no data are lost.

In some cases, a greater compression than that obtained by the described coding process is required at the expense of image quality. One way to achieve a doubling of the compression is, simply, to delete every other line at the coder and repeat every line at the decoder. In this mode, each line, as it is produced, will be shifted out from register 69 to the band buffer, and will also be stored in RAM 54, 55. Next, the repeat line is shifted from RAM 54, 55 through registers 56, 57, 58, 59, 60, and register 67 to the band buffer.

In another mode, one line of uncompressed image data may be transmitted through the system. This would occur if the compression algorithm results in expansion data, in which case, a transmission of the line raw data would be more efficient. Raw image data are received from the multiplexer 28 of Figure 2 on line 170 of Figure 4 and are coupled through register 71 and register 69, to RAM 54, 55, and to the output. Using this process, this line of image data is now available to the depredictor in Ram 54, 55 for the deprediction of the next time.

In the case where there are a plurality of lines of raw image data, the path is from line 70 through register 65 to the output. The previous line need not be saved.

The Band Buffer is that part of the EOM (Electronic Output Module) which assembles the various bit maps representing a character or an image into slices of the final page using a pair of 64 scan line buffers with a maximum capacity of 8192 bits per scan line.

The band buffer is equipped with a four-bit parallel input interface followed by masking and shifting logic forming 32-bit words that are then loaded into the appropriate band memory. The memory is divided into two identical blocks with each functioning independently as either an input buffer or an output buffer. Data from the buffer memory are transferred through a disassembler where the 32-bit words are broken down to blocks of 16 four-bit nibbles (called packets) for transfer to a ROS marking engine or into a continuous stream of 16-bit words to return to the Processor memory.

There are two bands of 64-scan lines each at 8192 bits in length. The two bands are structured to swap roles during processing allowing continuous data generation and transfer.

The page (marking) height can be specified in increments of 64 bits (packets) from a minimum of 512 bits (8 packets) when sending the output data to a ROS. In parametric mode, the height must be specified in increments of 256 bits (4 packets). This restriction will become more apparent when the parametric mode is discussed.

The Data Rate to the ROS is derived from the Processor Clock.

The contents of each band may be returned to the Processor memory. This is referred to as the parametric print mode and allows assembly of very complex, time-consuming pages.

Images are defined to a one-bit resolution in both X and Y directions. With rules, the height is also defined in a one-bit resolution.

Each bit presented to the band buffer input can be doubled, effectively increasing resolution. This works only in the scan length direction.

Each band may be defined to contain any number of scan lines from a minimum of two to a maximum of 64.

Whenever a change in the selected band for write/read occurs, a wakeup to the EOM processor allows reporting of that fact to the applications software. When a switch occurs while the input (building of band) processing is not complete (last item has not yet been sent to the hardware), an error signal is generated (band buffer behind) which is reported in a similar fashion as a band switch.

The data sent to the band buffer define which bit is to be written with the selected color (black or white). The band buffers are initialized to all 0's (white background) prior to filling regardless of the color selection.

The Band Buffer logic consists of three basic sections. The Shifter and Assembler, the memory write controls and memories and the output (memory dump) logic. The memory write control logic consists of the X and Y position registers and counters. The Shifter, Assembler, handshake controls, data flow and memory write control commands are derived from the decode of the position registers and the image parameters.

Data that have been shifted and assembled into a memory word are transferred into the word input register and a memory write cycle initiated. A flag is raised indicating that the memory is busy. When the memory write cycle is completed, the 'memory busy' is removed, allowing another word to be placed into the memory.

When a data output request is initiated, the read address logic is started and the contents of the memory transferred to the EOM to ROS interface in nibbles (4-bits) or to Processor memory in 16-bit words. Since each scan line consists of up to 256 words of 32 bits each and a page may not require that many words per scan line, a scan length register must be loaded into the read address logic by the Processor prior to the start of a page. After reading a word from the memory, that location is cleared by writing zero's into it.

The band buffer consists of two independently organized buffer memories. Each of the two buffers consists of 32—16K dynamic memory chips which store one band's worth of image data. The contents of address zero of all 32 chips holds the first 32 bits of the first scan line. Address 255 (decimal) holds the last thirty-two bits of that scan line. Address 256 starts the second scan line, and 16383 stores the last word of the last scan line. This organization makes it possible to access (read or write) up to 32 bits of a scan line in parallel while maintaining single bit control.

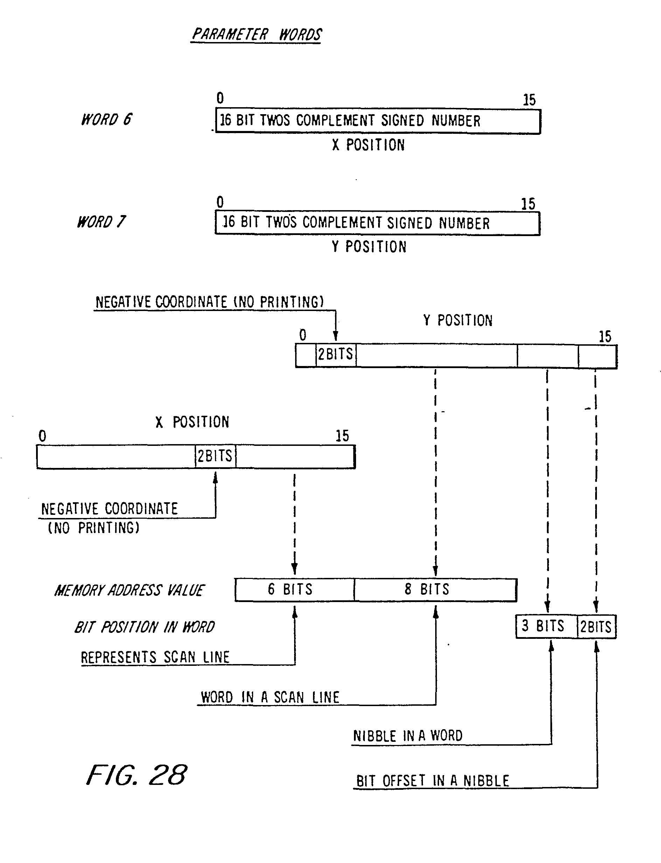

The 14-bit address of a particular word in the memory consists of two parts as shown in Fig. 28. The high order six bits represent the scan line number; the low order eight bits represent the vertical position in the scan line. (The five low order bits of the vertical position indicate a bit position within the selected word).

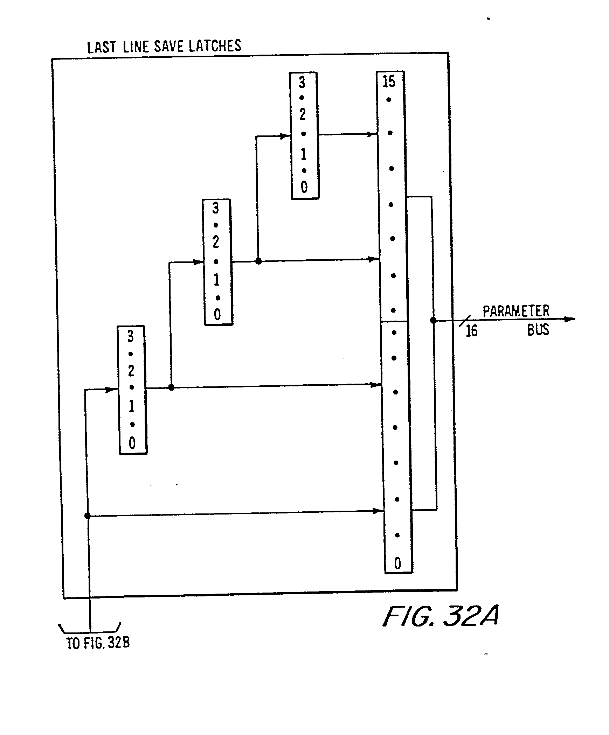

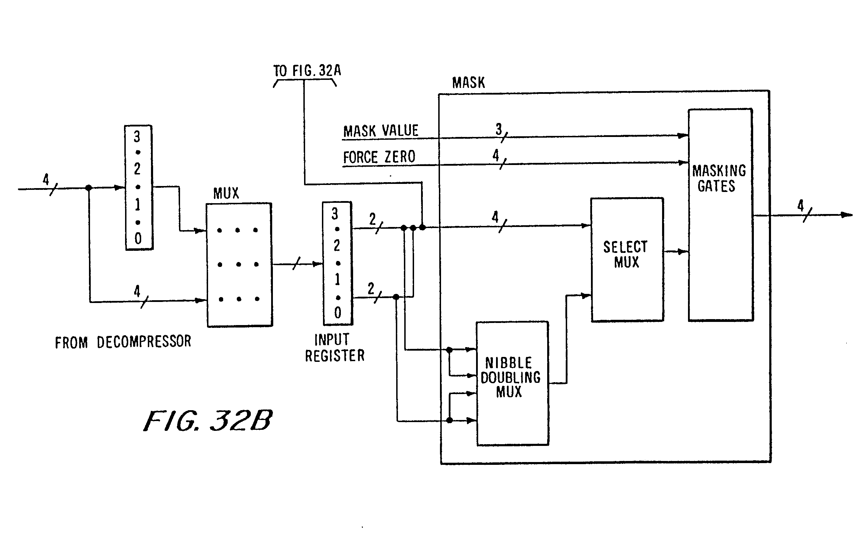

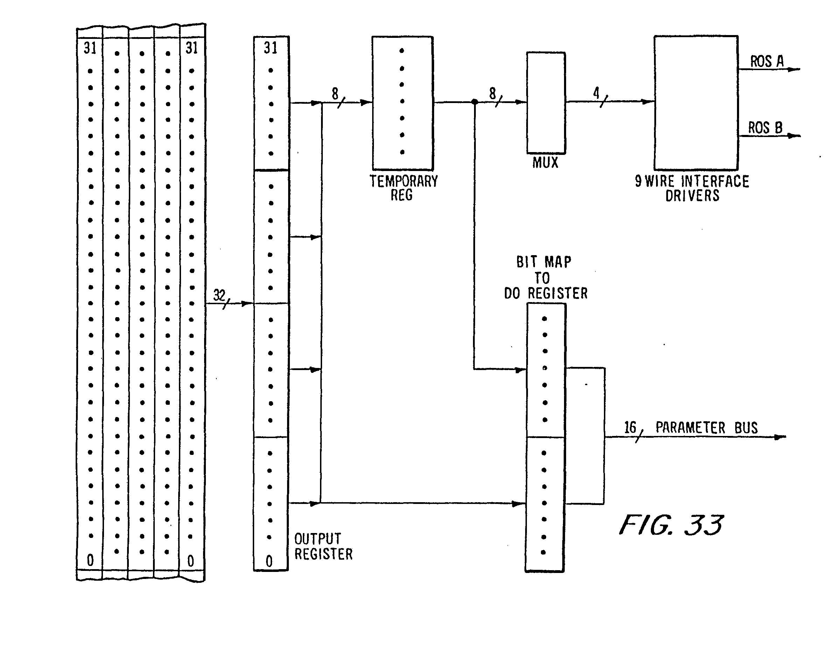

The basic data flow through the band buffer is depicted in Figures 32 and 33. Data (in nibbles) enter the band buffer logic through an input interface containing an input register and a temporary register. The temporary register's function is to provide a buffer allowing the pipeline structure to pause without requiring any look ahead detection. From the input register, the data may follow two primary paths. The main path is direct to the masking gates (in nibbles) where a zero nibble may be inserted (on the leading edges of scan lines) or any combination of 3 bits may be forced to zero on the last nibble (used for adjusting the last nibble on rules). In parallel, the second path is available which can return the last scan line of a band to the Processor memory using the parameter save process. From the masking gates, the data (still four bits wide) are routed through a shifter which bit aligns each nibble to any one of four bit positions. From the shifter, the bit aligned data (four bits wide) is then nibble aligned in an assembled register (28 bits wide). Seven nibbles are loaded into this register and a transfer is initiated to the memory input register (32 bits wide), where the eighth nibble is also loaded. The transfer in turn clears the assembler register making it available for the next nibble. The data contained in the memory input register change its function from being written directly into memory to only providing an enable term to write into the selected bits of memory. Each true bit of the input data specifies that writing of that bit in a band is to be done. The actual data inserted into the band depend on the color of the selected ink (white or black) and insertion is accomplished by selectively enabling the writing of each bit into memory. If the writing is not enabled, the contents of that bit are not altered and we are effectively ORing the data into the memory.

The transfer of data from the memory starts with the 32-bit output register composed of four 8-bit blocks each of which may be selected to transfer an 8-bit byte to a temporary output register. From here it may be unpacked into 4-bit nibbles, and sent to a ROS *via* the EOM to ROS interface or be repacked into 16-bit words for transfer back to the Processor memory *via* the OPC output logic.

The Buffer memory consists of two 16K by 32 bit dynamic MOS memory blocks each of which stores image data for 64 scan lines, with a maximum length of 8192 bits. The two buffer memories operate alternately performing loading and dumping operations. While one is being filled by the processor operating in conjunction with character generation microcode, the other buffer is being dumped and provides data for the ROS. The two buffers switch when dumping of one buffer is completed. As a buffer is dumped, it is clear to zero (representing a white background).

A band switch is performed to change the modes (Read, Write) on the Band Memories. The band in the Write Mode will be changed to Read, and the band in the Read Mode will be changed to Write.

There are four cases for which a band switch will occur. The first case handles the initialization situation where only the starting band has been dumped. At this time, since BandAvail has not yet been set, BandSwReq (Band Switch Request) will be generated when BandEnd and DumpIncr are true. The second case covers the situation where both bands have been dumped and the starting band has been loaded from the processor. CLRBAND is still true, and the first DumpIncr after IPackReq becomes true will cause the generation of BandSwReq. The third case covers the band switches which occur when data are being delivered to the ROS. In this case CLRBAND was reset after the second band switch was accomplished. With CLRBAND false, BandSwReq will be generated when BandEnd and DumpIncr are true. For the fourth case BandSwReq will be set when data are being transferred to the Processor and DestMatch and IPackReq are true.

The Band Buffer contains three paths for data to be returned to the Processor. The last scan Line of a Band, Bit Map Data (contents of a filled Band) and Parameters to be saved. The data path is through the Parameter Bus to the OPC which then transfers the loaded buffers to the Processor memory.

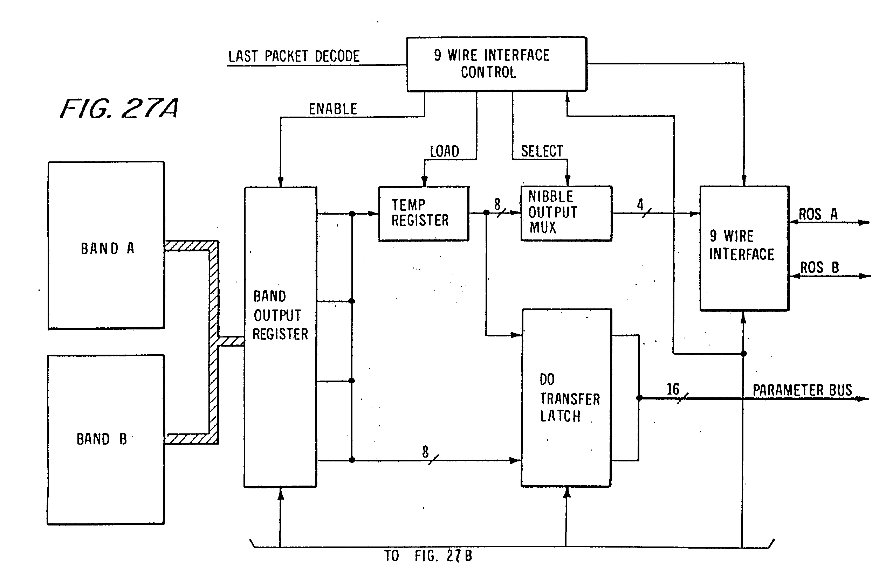

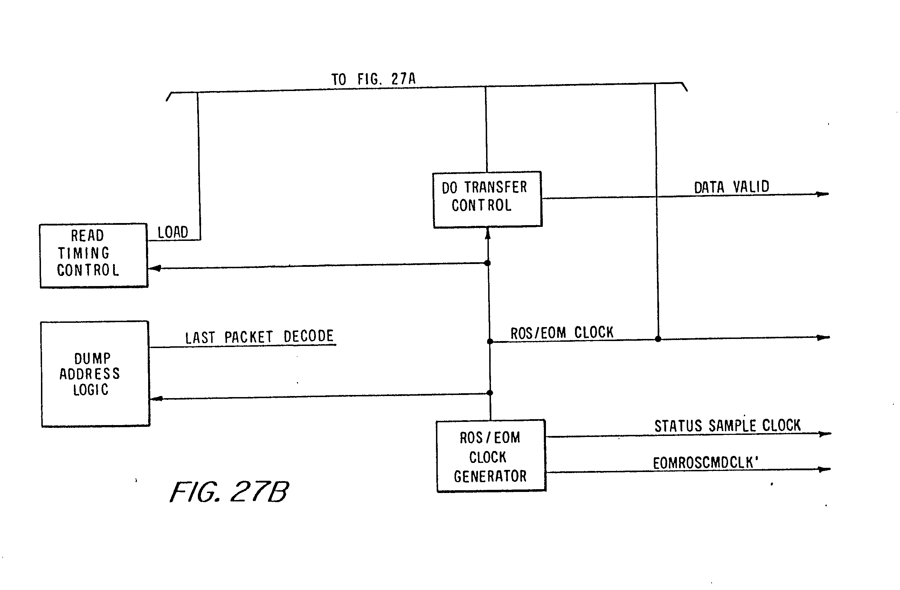

A Packet Request from the ROS causes an Internal Packet Request (IPackReq) to be generated. After initialization, this causes a Band switch and resetting of OFull flag. With CLRBAND false and OFull false, a memory read cycle is started after which the output register is loaded and OFull is set true. At this time, the transfer logic starts a packet sequence by initiating another memory read cycle (so data will be available during the second half of a Packet Transfer) and starting the Packet Transfer sequence. The Output register consists of four 8-bit latches selectable (outputs) one at a time. Each is selected for a two RClock period at the end of which a Temporary 8-bit register is Loaded. A nibble select (OSelect) flag selects first the most-significant nibble (4 bits) and loads that into the EOS to ROS interface register, then the least-significant nibble (Fig. 27).

This sequence is continued for a total of 16 nibbles (64 bits=1 packet). During the last nibble transfer, IPacket Request is interrogated to see if another packet sequence should be started.

A memory read operation will require eight clocks. If the Band Memory is operated at maximum rate, a word will be loaded into the output register every eight clocks.

To Transfer the output back to the Processor (Bit Map), the contents of the Temp register and one 8-bit value of the output register are loaded into a 16-bit transfer register connected to the Parameter Bus (see Figure 27). The loading is done every other 2RClock cycle.

Each buffer memory consists of 32 16K×1 dynamic MOS memory chips (MK4116P2 or equivalent), and requires a memory cycle at each of the 128 Row addresses. As the band buffer is being read from the scan line and sent to the ROS, the dumping band buffer is refreshed automatically. However, loading in a buffer is not guaranteed to touch all (or even any) rows, and since dumping a 64 scan line buffer requires more than 2 ms., the buffer being loaded will require refreshing every two milliseconds. Refresh to the loading band buffer is performed by the Timer Task of the Processor which issues an I/O Strobe every 1.5 to 2 ms. The Hardware decodes I/O Strobe to start a Refresh cycle.

Refresh to the selected Band consists of 128 memory cycles during which all writing to that Band is inhibited and may be terminated early when dumping of the second buffer is completed (i.e. Band Switch request has been set) in order to avoid interference with buffer switching and starting the dumping of the next Band.

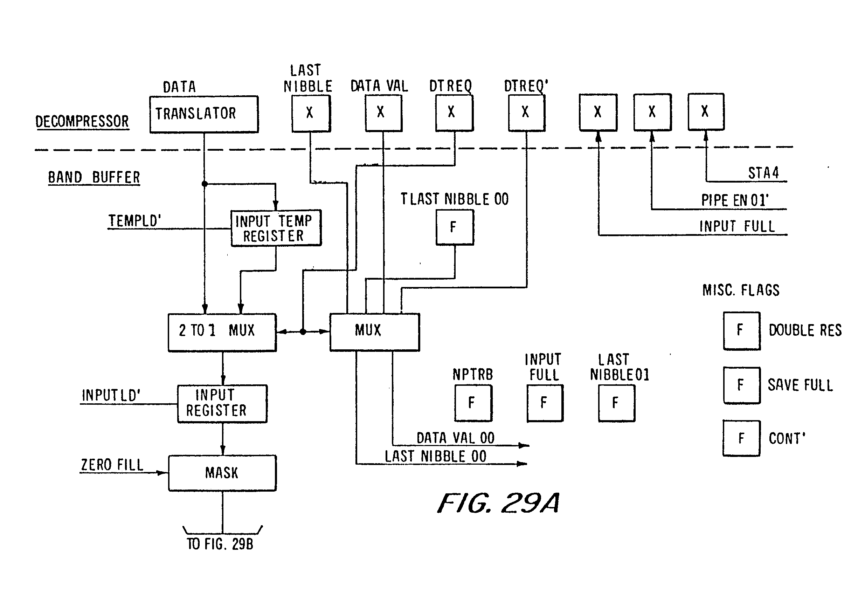

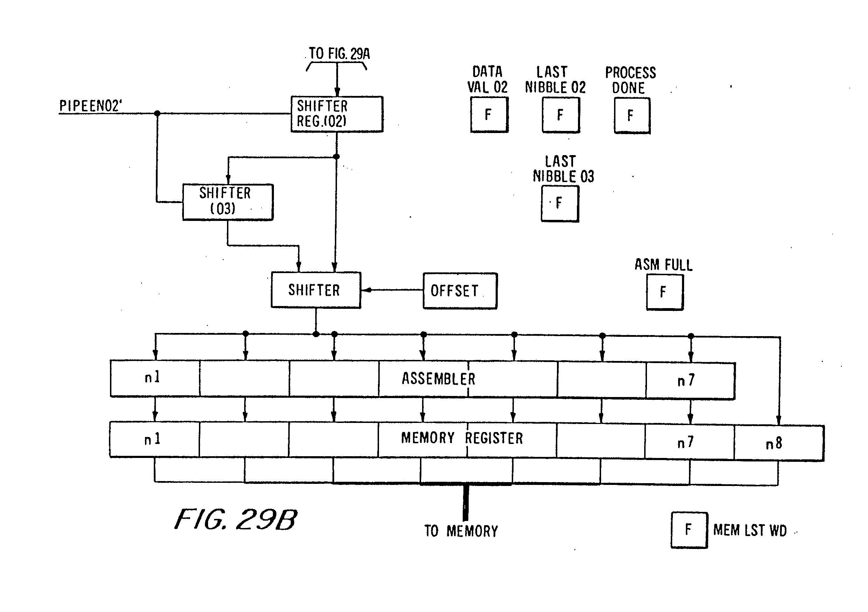

A generalized block diagram of the input section is shown in Fig. 29 showing the data flow and control flags for each stage in the pipe.

The interface to the decompressor consists of the following:

DecOutDt00
    to        4-Bit Data Path
DecOutDt03

DecLstNib    Last nibble flag associated with
             the transfer of the last nibble
             of any scan line

BBdtReqT     Output of a data request register
             the Decompressor utilizing signal
             from the Band Buffer and the
             Decompressor

DecDtVal     A valid data nibble indication
             on the output of the Decompressor

PipeEn01     an indication by the Band Buffer
             logic that the valid contents of the
             register are being transferred to
             the first shifter register

STA4         An indication of the Band Buffer
             that data may be processed

To maintain the maximum data transfer rate, the BBDtReq is generated on the Decom-

**0 048 625**

pressor board. The necessary signals to enable and disable the data request are sent across the interface.

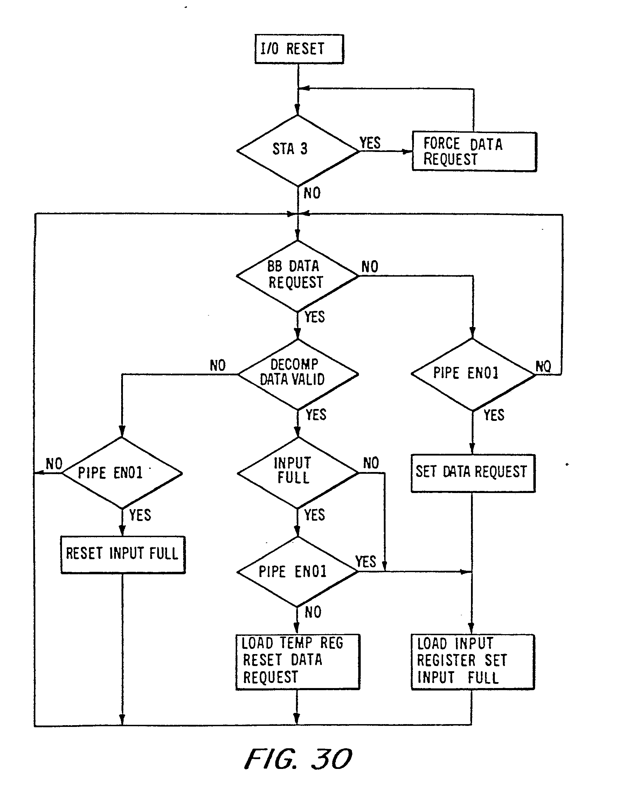

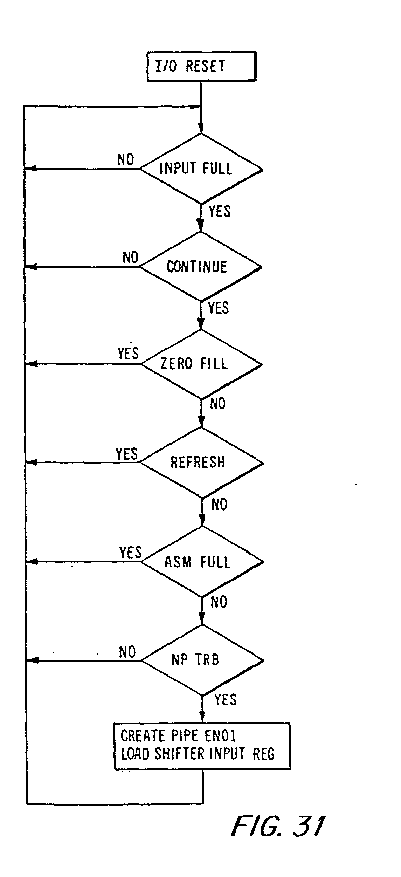

The interface functions independently and is controlled by a flag called continue. When the Band Buffer is ready to allow processing (STA4), the Decompressor outputs a valid nibble along with a Data Valid flag. The input register is then loaded if the input full flag is not set, otherwise the data are loaded into the input Temporary Register and Band Buffer Data Request reset (see flow chart Fig. 30 and Fig. 31). Whenever space is available (in the Band Buffer) the input data are transferred along to the next stage in the pipe and the data status flags set for each stage in the pipe indicating the type of data in that stage (see Fig. 29).

The placement of a rectangular array (both Images and Characters are considered identical at this stage) anywhere on the page without constraints of incremental positions in any direction gives rise to a need to be able to position this rectangular array on a page within a bit boundary as opposed to the nibble (4-bit string) boundary structure of the output band buffers.

The source array is formated as N nibbles per scan line and must be overlayed onto the band buffer without concern to the nibble boundaries imposed by the fixed memory structure. This creates a need to shift the nibble boundaries of the source array to overlay them onto the memory.

Each scan of the rectangular array to be placed into the band buffer consists of a specified number of nibbles and is provided by the Processor as the height of the array. Since this parameter is specified in terms of nibble boundaries, only a simple shifting of one, two, or three bits is required. The amount of this shift is determined from the two least significant bits of the y coordinate.

The shifter consists of a pair of nibble registers with the output of each going to a 4-bit 4-way shifter. The 4-bit output is selected as 4 of 7 and read into one of the holding registers (there are 7). Included in the controls are a scan width register and counter, offset register, word nibble register and counter, and decode and timing logic to allow building of a memory word. Each of the above registers is loaded from an internal 16-bit Parameter bus which transfers 4 words of parameters to the Band Buffer. Once loaded with the next character's parameters, the shift data registers and the memory word registers are cleared. This in turn will provide the leading word masking. The data are then entered into the first shift data register and a shifted output is loaded into a nibble register corresponding to the decode (1 of 8) of the word nibble counter. Once the last nibble is available, the word is transferred to the memory cycle register starting a memory write cycle for the band buffer. If an end-of-scan is reached before the last nibble of the memory would register is loaded, zeros are loaded into each successive nibble until the last nibble is loaded. A transfer to the memory cycle register is completed and the memory word register is reset. The word nibble counter is reloaded from the word nibble register and the loading continues.

Masking is also necessary when placing rules into the Band. A rule may be specified with a height value in a one-bit resolution. Since all data are transferred in nibbles, the height is listed as an incremental number of nibbles (usually containing a fractional nibble). With the actual rule being an arbitrary number of bits high, the last nibble must be masked. Contents of the data used for the rule is delivered from the Data Input Interface (Decompressor) as raw data and can consist of all ones (solid rule) or any pattern repeatable every 16 bits.

The band in the write mode is written into in the following manner. RAS' is driven low for the entire word. All data input lines will contain a "1" if the color bit is 0 (black) or a "0" if the color bit is 1 (white). Each CAS driver is low at WCAS time if the associated data bit from the memory input register is "1", and the CAS driver remains high if the bit is "0". The WE line to the devices is driven low for the entire word. The net result is that the selected address is refreshed for each device during a write cycle, but only the devices for which the CAS drivers are low are written into. This mechanization of the write control logic is the "OR-ing" buffer concept which means that only those devices for which the da bits are "1" are written into.

Two completely independent memory timing controllers are selectively multiplexed to each of the two memory arrays. The write controller is connected to one Band while the read controller is connected to the other Band.

The write controller consists of a timing generator creating the RAS, CAS, WRITE and Address select signals for the selected memories as well as address increment strobes for the address counters and selected windows to synchronize input processing to the memory cycle. The write memory cycle consists of 8 cycles of which the first two and the last one provide the memory precharge time while the inner 5 cycles provide the RAS or memory cycle window. Cycle 1 to 6 are identified with a MBusy signal and the last cycle (8) as well as all idle cycles are identified with WC8 signal. The actual writing is completed before WC8 is generated and all data input and address updates are completed at either the end of the last write cycle or before the first cycle.

The read controller is identical in construction to the write controller except for a 9th cycle inserted when operating in parametric mode. This is done to accommodate the Read/Write cycle timing requirement of the memory devices. The 9th cycle is primarily provided to accommodate the memory cycle timing requirement for a read/modify write operation. The read cycle consists of a standard memory read sequence followed by writing 0's into the memory. This provides the initialization required of each band before any data may be written into it.

The last scan line of the Band of a current image is routed through a set of 4-bit registers constructing a 16-bit word. These words are then transferred to the OPC through the Parameter Bus. As signal from the OCB called OCBAvail indicates whether the OCB is ready to receive data. Whenever the OPC is not ready to receive the data, the Band Buffer drops a flag (cont) in response to OCBAvail FALSE AND LastLine TRUE when Parameter Transfer enable bit is set causing further processing of data from the Decompressor to halt. If the width of the image reached zero, Partial Save Parameter flag is true, if no State Save Parameter flag is true, then the save operation is inhibited. When the OCB is ready to receive the Last Line data, a LstLnRdy flag is set followed by a series of 2 EOM Clock Cycle SData Valid signals allowing transfer to the OPC.

The Data output is routed through a 16-bit transfer register onto the Parameter Bus (Fig. 27). An internal IPacketRq is generated whenever the OPC is available for taking the data and the Memory is in the Dump mode and filled with data. For this operation, only one Band is utilized and is first filled with Data. A Band switch is generated when Band Done is set, then output transfer is allowed. When the dumping is complete, Band Done is reset and a Band switch is again initiated. This allows the sequence to progress through filling and Dumping again.

After initialization of the Band Buffers and the subsequent filling of the first Band, the last item causes the Band to switch. When the selected Band matches the Band in read mode, DestMatch causes IPackReq to be generated. This will start the first packet transfer sequence. With the destination bit set, and the OCBAvail TRUE (the data return buffer is available), the first word of the memory is broken down to an 8-bit byte (held in Otemp Register) which is again combined with the next 8-bit byte to form a 16-bit word. BandRdy is generated signalling the OPC that the data transfer logic is enabled and a valid data signal (Dready) is generated for 2 EOM Clock Cycles every 4 EOM Clock Cycles until either OPCAvail is set FALSE (signalling the output Buffer is full and not ready) or all the data for that Band have been transferred. After the last word has been transferred, the BandRdy signal is dropped to indicate to the OPC that transfer is complete and to store the balance of its buffer. The Band is again switched to write mode making it available for filling.

Since Data from the OPC are always transferred in increments of Blocks (16 words), this requires that the returned data (contents of one band as defined by height times number of scan lines) will always be a multiple of blocks. With the flexibility of defining a band to be from 2 scan lines to 64 scan lines, the height then must be limited to multiples of blocks (4 Packets=1 Block).

A flag indicates when the system needs parameters (STA3) or may process input data from the decompressor (STA4). when this flag is in STA3 and parameters have not yet been received, a request is sent to the OPC (Param Req.) for new parameters. The OPC generates all controls signals to load the proper parameters into their respective registers.

The Parameter transfer logic consists of an Address decoder (generally a one of 16 decode) which is loaded into a register using OPCCLock. ParaDatValid is qualified with the latched Address decode to enable loading parameter register or generate a clock to load that parameter word. Receiving the last word (word 8) sets Parameters Loaded which in turn causes these parameters to get preloaded into working counters and registers. This preload also causes the STA3 flag to switch to STA4 allowing the input data to be processed.

Parameter Word 8 is used for a default word and may be loaded with parameter data when word 8 is available or may be cleared to all zero's at this time. The default of all zero's is the normal value of word 8 for most Font images placed into the Band.

If the no state save bit is ever set, a parameter request is inhibited until an I/O Reset is generated.

A memory cycle is initiated by the Start Packet signal for the nine cycle case, and the Start Packet F/F (Start Packet signal delayed) for the eight cycle. The Start Packet F/F initializes the Output Register Select function such that the most-significant byte of the output register will be loaded into the temporary register during the two clock times following loading of the output register. Since there are two words in each packet, the sequential selection of four bytes occurs twice for each Start Packet signal. As a memory cycle is started, DBUSY goes true and DC10 goes false. DBUSY is true for six of the eight cycles in the eight cycle case. DC10 is false seven cycles, respectively. DC10 enables loading of the output register, whereas DBUSY' indicates when the memory can accept another request. The PacketSync signal is sent to the ROS true for the first four nibbles of each Packet of a scanline except the last Packet. For the last Packet of each scanline it is true for the first twelve nibbles.

The Packet transfer function changes for the Enable Loop mode. When this function is selected, Packet Sync becomes a Data Valid for a complete scan line beginning with the first nibble out and ending one clock cycle after the last nibble of the scan line.

After Power is applied to the system, the Band Buffer logic must be initialized to the proper configuration.

An I/O Reset (STA0) causes all major flags to get reset to their initial states. As a result, STA3 is set causing a parameter request to be generated. At this time, the logic requires a command word to be loaded from the Processor through the Parameter Bus. When Band Buffer Command B is loaded, a load enable of two EOM clock cycles is generated (Preload 1) which utilizes the Band select latch to the designated Band. This also sets ClearBand causing the Memory Dump logic to sequence through all the address locations setting them to Zero. When the first Band reaches the last address, a Band switch request is generated and Band Available is set. This allows filling the first Band with data if parameters have been loaded. When the second Band reaches the last address Bands Dumped is set. When Bands Dumped is true and the first Band has been loaded with data (Band Done is true), a wakeup request is generated (Band Ready Request). A response from the Processor resets this flag.

The dump logic will continue cycling through the second Band (keeping it refreshed) until a packet request is generated by the selected ROS. At this time, a Band switch request is generated and Clear Bands is reset allowing normal operation to proceed.

Ram initialization is accomplished with a read/write cycle to all the addresses within the page height, for each band while CLRBAND is true. The sequence is started with PRELOAD 1 which causes the dump address counters to be set to zero, and sets the initialization for each band. A memory dump cycle is executed at each address, and at the end of each cycle, the address counters are incremented. The address counters are compared to the page height latch and when the last word has been refreshed, the initialization latch is reset. A Band Switch occurs after the first band which causes the sequence to be repeated for the second band. After the second band switch, CLRBAND is reset, and the initialization sequences is terminated.

The normal Refreshing is accomplished by the Refresh logic cycling through the first 128 addresses representing each row in that Band. This Refresh logic is initiated through the decode of a I/O Strobe from the Processor and issued every 1.5 to 2 ms.

The Band in the output (Dump) mode does not have any provisions for automatic refreshing and therefore must be refreshed by the process of reading a scan line at least once per 2.0 ms.

## Claims

1. A system for converting compressed image data and character-coded text into a bit map of mixed image and font data suitable for printing on a raster-output-scanner, comprising a font generator (52) for converting character-coded text into font data, a decompressor (Figure 20) for decompressing compressed image data into image data, and a band buffer memory (56) into which are loaded front and image data, characterised in that the band buffer stores a bit map, i.e. a block of data bits corresponding to several lines of raster-output-scanner output, and wherein each consecutive bit corresponds to each consecutive dot on the raster, the font and image data being loaded into the bit map in the relative positions in which they will appear on the final output raster.

2. The system of Claim 1 wherein said buffer is in two parts, one part being intended to be loaded with data while the other is supplying data to the raster-output-scanner.

3. The system of Claim 1 or 2, wherein said decompressor (Figure 20) comprises an unpacker 102 for segmenting said compressed image data into run-length encoded words; a decoder (111, 106, 116, 112) for converting said encoded words into predicted image data, and a depredictor (110) for converting said predicted image data into image data.

4. The system of any preceding claim, further comprising means for loading received image data directly into said buffer (56) in the event that image data are received in uncompressed form.

5. The system of any preceding claim, further comprising a memory (52) into which the contents of said buffer many be stored for future use.

## Revendications

1. Système pour convertir des données d'image comprimées et un texte codé en caractères en une mappe de bits de données d'image et de police mélangées, convenant pour l'impression sur un dispositif de balayage à sortie récurrente, comprenant un générateur de police (52) pour convertir du texte codé en caractères en données de police, un décompresseur (figure 20) pour décomprimer des données d'image comprimées en données d'image, et une mémoire tampon de bande (56) dans laquelle sont chargées des données de police et d'image, caractérisé en ce que le tampon de bande stocke und mappe de bits, c'est-à-dire un bloc de bits de données correspondant à plusieurs lignes de la sortie du dispositif de balayage à sortie récurrent, et où chaque bit consécutif correspond à chaque point consécutif du balayage récurrent, les données de police et d'image étant chargées dans la mappe de bits dans les positions relatives dans lesquelles elles apparaîtront sur la sortie récurrente finale.

2. Système selon la revendication 1, où le tampon est en deux parties, une partie étant destinée à être chargée avec des données alors que l'autre fournit données au dispositif de balayage à sortie récurrent.

3. Système selon la revendication 1, ou la revendication 2, où le décompresseur (figure 20) comprend un dispositif de décompression (102) pour segmenter les données d'image comprimées en mots codés en longueur de passage; un décodeur (111, 106, 116, 112) pour transformer les mots codés en données d'image prédites, et un dispositif de déprédiction (110) pour transformer les données d'image prédites en données d'image.

4. Système selon l'une quelconque des revendications précédentes, comprenant en outre un moyen pour charger des données d'image reçues directement dans le tampon (56) dans le cas où des données d'image proviennent sous forme non comprimée.

5. Système selon l'une quelconque des revendications précédentes, comprenant en outre une mémoire (52) dans laquelle les contenues du tampon peuvent être stockés pour utilisation future.

**Patentansprüche**

1. System zum Umwandeln komprimierter Bilddaten und buchstabenkodierten Textes in eine Bitkarte vermischter Bild und Schriftartendaten, die für das Ausdrucken auf einem Raster- Ausgabe-Abtaster geeignet sind, mit einem Schrifttypengenerator (52) zum Umwandeln buchstabenkodierten Textes in Schrifttypendaten, einem Dekompressor (Fig. 20) zum Dekomprimieren der komprimierten Bilddaten in Bilddaten, und einem Bandpufferspeicher (56), in den die Schrifttypen- und Bilddaten eingegeben werden, dadurch gekennzeichnet, daß der Bandpufferspeicher eine Bitkarte, d.h. einen Block von Datenbits entsprechend mehreren Linien des Rasterausgabeabtaster-Ausgangs speichert, und wobei jedes aufeinanderfolgende Bit jedem aufeinanderfolgenden Punkt des Rasters entspricht und die Schrifttypen- und Bilddaten in die Bitkarte an den entsprechenden Positionen eingegeben werden, an denen sie auf dem Endausgaberaster erscheinen werden.

2. System nach Anspruch 1, dadurch gekennzeichnet, daß der Pufferspeicher zweigeteilt ist, wobei ein Teil dazu bestimmt ist, mit Daten geladen zu werden, während der andere Teil Daten an den Rasterausgabeabtaster liefert.

3. System nach Anspruch 1 oder 2, dadurch gekennzeichnet, daß der Dekompressor (Fig. 20) einen Entpacketierer (102) zum Segmentieren der komprimierten Bilddaten in lauflängen-kodierte Wörter, einen Dekodierer (111, 106, 116, 112) zum Umwandeln der kodierten Wörter in vorhergesagte Bilddaten und einen Deprediktor (110) zum Umwandeln der vorhergesagten Bilddaten in Bilddaten aufweist.

4. System nach einem der vorhergehenden Ansprüche, dadurch gekennzeichnet, daß es Einrichtungen zum Eingeben der empfangenen Bilddaten direkt in den Pufferspeicher (56) im Falle, daß die Bilddaten in unkomprimierter Form empfangen werden, aufweist.

5. System nach einem der vorhergehenden Ansprüche, dadurch gekennzeichnet, daß es einen Speicher (52) enthält, in den der Inhalt der Pufferspeichers für den zukünftigen Gebrauch eingespeichert werden kann.

**FIG. 1A**

PROCESSOR

| IOT COMMAND & STATUS | INPUT CHANNEL BUFFER 256 x 16 | INPUT CHANNEL BUFFER 256 x 16 | EOM COMMAND & STATUS | INPUT PARAMETER BUFFER 512 x 16 | OUTPUT CHANNEL BUFFER 512 x 16 |

OPC

ICB TEST

TTL TO ECL

UNPACKER

RAW DATA BYPASS

DECODER

DEPREDICTOR

DECOMP CONTROL

PARAMETER TRANSFER LOGIC

PARMETER TRANSFER CONTROL

TTL/ECL

ECL/TTL

IPB BUS

OCB BUS

REG

REG

DECOMPRESSOR

TO FIG. 1B

0048625

FIG. 1B

OUT DATA BUS

RECEIVE REGISTER — 57

WAKE UP LOGIC

59 58

ICBHR1 ← ICBAR1 → ICB1 256×16 — 50  ICB2 256×16 — 50 ← ICBAR2 → ICBHR2

58 59 50

ICB CONTROL

OUT REGISTER — 62A

62B

ICB REQUEST — 61

DECOMPRESSOR OR DECOMP-BY-PASS

FIG. 3

0048625

FIG. 4

FROM ⟨0⟩

①

ICBQMEF SET —NO→

YES
E4

LOAD 1 WORD
RESET B 1/2 EMP
STORE NADDR 1/2
INC WD CNT
INC ADDR 1/2

←NO— WD CNT = 15

YES

DEC BTA CNT

E5

NO— BTA = 0

YES

③

DEC PARA LOADED —NO→

YES
E6

XFER WK G PARA
LOAD ADDR 1/2 FA
LOAD HR 1/2 FA
LOAD OUT WORD CTR FA
RESET ADDR 2/1
RESET DEC PARA LD FF
SET ICB RDY
SWITCH BUFFERS

YES← RULE

NO

INH ADDR

⟨0⟩
⟨6⟩

ICB CONTROL
FONT LOADING

*FIG. 5*

FROM

⟨2⟩

ICBOMEF SET — NO

YES   E7

**E10**
LOAD 1 WORD
RESET 1/2 EMP
INC WD CNT
STORE NADDR 1/2
INC ADDR 1/2

LOAD 1 WORD
RESET B 1/2 EMP
INC WD CNT
STORE NADDR 1/2
INC ADDR 1/2

⟨4⟩

WD CNT = 15 — NO

YES

YES   ICBOMEF SET

NO

**E8**
INC BLKS RCV'D/U CTR

DEC PARA LOADED — NO

NO   DEC PARA LOADED

YES

YES

ICB CONTROL
IMAGINAL INITIAL LOAD

**E9**
XFER WKG PARA
LOAD ADDR 1/2 FA
LOAD HR 1/2 FA
LOAD OUT WORD CTR FA
RESET ADDR 2/1
SET ICB RDY
RESET DEC PARA LD FF
SWITCH BUFFERS

*FIG. 6*

⟨5⟩
⟨6⟩
GO TO UNLOAD

FIG. 7

FROM ⬡2⬡ ⬡3⬡ ⬡4⬡

⬡6⬡

**B**
ICB RDY — YES →
**H**
DEC PARA REQ — YES →

RESET CHDTRDY

NO ↓ (from ICB RDY)

**H**
DEC PARA REQ — YES →
NO →
**A**
CHD TREQ — NO →

R1 YES

NO ↓ (from H DEC PARA REQ)

RESET ICB RDY
RESET CHD TRDY
R4

**W**
WK G FONT — YES →
NO ↓

CLOSE IMAGREQ WDW

⬡7⬡

**A**
CHD TREQ — YES →
NO ↓
**C**
CHD TRDY — YES →
NO ↓
**D**
EDGE CLOCK HI — YES
NO

**D**
EDGE CLOCK HI — NO →
YES →

*FIG. 8A*

TO FIG. 8B

TO FIG. 8A

```
        C
     CHD TRDY ──YES──>
        │
        NO
        │
        D
   EDGE CLOCK ──YES──> L1
      HI                LOAD OUT REG
        NO              SET CHD TRDY
                        IINC ADDR 1/2
   W                    INC HOLDR 1/2
WKG FONT ──YES──        INC OUT WORD CNT
   NO

OUT BLK CNT ──YES──>  DEC BLKS REQ'D/U CTR
   NO                 DEC BLKS RCV'D/U CTR
```

_ICB CONTROL UNLOADING 1_

### FIG. 8B

```
LAST WORD ──YES──> (A)
   NO
```

```
(A)
 │ L2
SET B 1/2 EMP
RESET: ADDR1, ADDR2
 │
       F
   OTHER BUF ──NO──
     EMPTY
     YES
      │ R2
RESET ICB READY
      │ S1
SWITCH BUFFERS
      │
     (6)
```

_ICB CONTROL UNLOADING 2_

```
FROM (6)
   │
  (7) <──
   │
 MEM PIPE ──NO──
 CLEARED
   YES
   │ R3
SET BUFFERS 1&2 EMPTY
RESET ADDR 1&2
RESET BLKS REQ'D/U CTR
RESET BLKS RCV'D/U CTR
   │
  (0)
```

### FIG. 9

FIG. 10

*FIG. 11A*

RESET

FROM STATE 2
OR
FROM STATE 4 → ① 

SET LPB ST0
RESET LPBST1, LPBST2,
LPBST3, & LPBST4
SET FIRST PARA BLK

NO ← START
YES

SET LPB CNTR=0
ISSUE WAKE UP
RESET LPB ST0
SET LPB ST1

②

LDIPB ?
(START PARAMETER XFER)   NO →
YES

DECREMENT BLK CNTR

INCRIPB ADR CNTR

PARABLKTE ?
(END OF BLK XFER)   NO
YES

RESET FIRST PARA BLK

DO BLK CNT=0   YES
NO

TO FIG. 11B

0048625

11

FIG. 11B

TO FIG. 11A

DO BLK CNT=0
YES / NO

PRESET LPB ADR=0
RESET FIRST PARA BLK

PARA BLK TE? (END OF BLK XFER)
YES / NO

FIRST PARA BLK SET
NO / YES

TRAP OUTD[12:14] WORD 0
TRAP OUTD [4:8] WORD 2

*WAKEUP RULE INK [DOBLKCNTR]*

IPB TEST
YES / NO

LON1B ADR05
NO / YES

INK FLAG SET
YES / NO

SET NEW PARA FLG

INK FLAG SET
NO / YES

PRE SET LPB ADR=09

ISSUE WAKEUP DECREMENT BLK CNTR

2

IPB TEST
YES / NO

INK FLAG SET
YES → TO STATE 2
NO → TO PAGE 3

0 048 625

12

**0 048 625**

FROM STATE 1

PRESET IPB ADR CNTR=00

OUT PARA RDY FLG — YES

NO

LD IPB OUT REG

DEC PARA REQ — NO

YES

BB PARA REQ — NO

YES

ICB NEW PARA LOADED — NO

YES

SET OUT PARA RDY FLG

OCB FULL — NO

YES

SET OUTPUT PARAM FLG
ENABLE 4 BIT PARAM
WORD ADDRESS        *DEV ADR [0:3]*

PARAM WRD = 0S — YES → RESET PARA RDY FLG
RESET OUT PARAM FLG → TO STATE 4

NO

INCR IPB ADR CNTR

*FIG. 13*

13

FROM STATE 3

(LPB ADR CNT = 09)

| SET PAR SENT |
| RESET IPB ST3 |
| SET IPB ST4 |
| SEND IST DECODE |

PL RDY ?  — NO →

| RESET PAR SENT |
| RESET IPB ST4 |
| SET IPB ST0 |

→ TO STATE 0

YES

SW BYTE ?  ← NO

| LD IPB ADR CNTR = 09 |

YES

(DEC CLOCK TO OPC)

LD ENABLE OPC  — YES →

NO

*FIG. 14*

LO BYTE FLG SET  — YES →

NO

| LOAD IPB REG |
| INCR IPB ADR CNTR |
| SET LO BYTE FLG |
| OUTPUT LO BYTE |

| RESET LO BYTE FLG |
| OUTPUT HI BYTE |

IPB STATE 4 FLOW DIAGRAM

14

# FIG. 15A

## OCB BANDBUFFER BIT MAP DATA TRANSFER

FROM BANDBUFFER

BIT MAP XTER — NO → BIT MAP FLG — YES →

YES ↓                    NO ↓

SET BIT MAP FLG          OPC B RDY SYNC — YES →

BIT MAP FLG — NO         NO ↓

YES ↓                    LST LN CTL SET — YES →

SET OPC B RDY SYNC       NO
SET OCB ADR CNTR = 0

OPC BRDY SYNC — NO       RESET BIT MAP FLG

YES ↓

GEN OPC BB SYNC          BIT MAP FLG — YES →
SET LST LN CTL
                         NO ↓
LST LN CTL SET — NO
                         RESET OPC B RDY SYNC
YES ↓
                         OPC B RDY SYNC — YES →
DATA RDY (7 ON SEC PULSE) — NO
                         NO ↓
YES ↓
                         SET OCB ADR CNTR = 00

TO FIG. 15B

15

TO FIG. 15A

SYNC DATA RDY
WRITE OCB RAM
INCR OCB ADR CNTR

OCB ADR
CNTR = 508 —— YES —→ SEND SIG TO BB TO STOP XFER AFTER THIS PACKET (OCB AVAIL)

NO

OCB ADR
CNTR = 511

NO ←—    —— YES

LST LN
CTL SET —— YES

NO

RESET LST
LN CTL

SET OCB FULL

TO OUTPUT DATA
( TO DO)

*OCB BANDBUFFER BIT MAP DATA TRANSFER*

*FIG. 15B*

FROM BAND BUFFER          *OCB BANDBUFFER LAST LINE DATA TRANSFER*

LAST LINE
TRANSFER —— NO —→ LST LINE SYNC —— YES

YES                NO

SET LST LN FLG

LST LN SYNC        OPC B RDY SYNC —— YES

NO ←—              NO

YES

SET LST LN FLG     LST LN CTI SET —— YES

NO

*FIG. 16A*

TO  FIG. 16B

O 048 625

OCB BANDBUFFER LAST LINE DATA TRANSFER

FIG. 16B

FLOW DIAGRAM--OCB RECEIVE PARAMETERS

FIG. 17

FIG. 18

FIG. 19A

FIG. 19B

STSAMPLECLK
ROSSTSEARCH'
ROSSTSHIFT

→ CLOCK CONTROL →

INCSTADD
WRITE ROSST

TO FIG. 19A

(EVERY 4 STATUS SCMPLE CLOCKS) STSHIFTCLK →

STATUADDR 4, 5, 256A, 256B  4
INCSTADD
STFLAG

→ ROS STATUS PROM → REG →

ROSSTSEARCH'
ROSSTSHIFT
ROSSTCOUNT

0048625

21

FIG. 20

TO BAND BUFFER

FIG. 21

FIG. 22

FIG. 23

## FIG. 24

| | X | | | | | X | X | | X | | | X | X |
|---|---|---|---|---|---|---|---|---|---|---|---|---|---|
| X | X | X | | X | | | | X | P₀ | P₁ | P₂ | P₃ |

-5  -4  -3  -2  -1

*FIG. 24*

DEPREDICTOR BITS

*FIG. 25*

FIG. 26

FIG. 27A

FIG. 27B

*PARAMETER WORDS*

WORD 6

```
0                                              15
| 16 BIT TWOS COMPLEMENT SIGNED NUMBER         |
```
X POSITION

WORD 7

```
0                                              15
| 16 BIT TWO'S COMPLEMENT SIGNED NUMBER        |
```
Y POSITION

NEGATIVE COORDINATE (NO PRINTING)

Y POSITION

```
0                                              15
| 2BITS |          |        |     |
```

X POSITION

```
0                                    15
|                | 2BITS |          |
```

NEGATIVE COORDINATE
(NO PRINTING)

*MEMORY ADDRESS VALUE*

```
| 6 BITS | 8 BITS |          | 3 BITS | 2BITS |
```

*BIT POSITION IN WORD*

REPRESENTS SCAN LINE

WORD IN A SCAN LINE

NIBBLE IN A WORD

*FIG. 28*

BIT OFFSET IN A NIBBLE

*FIG. 29A*

FIG. 29B

FIG. 30

FIG. 31

LAST LINE SAVE LATCHES

PARAMETER
BUS

*FIG. 32A*

TO FIG. 32B

FIG. 32B

FIG. 33